# EUROPEAN PATENT SPECIFICATION

(11) **EP 2 397 950 B1**
(45) Date of publication and mention of the grant of the patent: **20.08.2014**
(21) Application number: 11181440.6
(22) Date of filing: 30.10.2002
(51) Int. Cl.: G06F 15/16, G06F 15/177, G06F 9/00, G06F 9/24

(54) **A web services push gateway and method**
Push-Gateway für Web-Dienste sowie Verfahren
Passerelle Push pour des services de web et procédé

(30) Priority: 20.11.2001 US 996406; 11.01.2002 US 43936
(43) Date of publication of application: 21.12.2011
(62) Divisional of application: 02783350.8
(73) Proprietor: Nokia Corporation, 02610 Espoo (FI)
(72) Inventor: Mulligan, Michael, FIN-33200 Tampere (FI); Nykanen, Petri, FIN-37120 Nokia (FI); Toijala, Jouni, FIN-02150 Espoo (FI)
(74) Representative: Swindell & Pearson Limited

(56) References cited:
- EP-A2- 1 021 021
- WO-A-01/43390
- WO-A1-00/77654
- WO-A2-01/69387

## Description

### FIELD OF THE INVENTION

The present invention relates generally to network communications systems, and more particularly, to a system and method for facilitating access to service functionality available on landline and/or wireless networks.

WO01/69387 (D1), published 20 September 2001, discloses a notification platform architecture. D1 discloses a system and methodology to enable a variety of information associated with one or more notification sources to be directed to one or more notification sinks via the notification platform architecture. In D1, the architecture includes a context analyzer for determining a user's state such as location and attentional focus, wherein the user's state is employed by a notification manager to make decisions regarding what, when and how information generated by the notification sources should be forwarded to the notification sinks. According to D1, these decisions can include a cost benefit analysis wherein considerations are given as to whether the benefits of notifying the user are outweighed by the costs of disrupting the user. In D1, decision-theoretic policies and/or somewhat less formal heuristic policies can be employed to enable the decision-making process within the notification manager.

EP1021021 (D2), published 19 July 2000, discloses a method and apparatus for providing awareness-triggered push. According to D2, D2 enables, in a network, state notifications to trigger data transfer from a source server or from an intermediate proxy server to an often disconnected client computer, based on the client's entering a particular state. In D2, the intermediate proxy server queues push requests from source servers to target clients. The state notifications include state information based on different criteria. In D2, the state notifications may specify push information which may be used to determine the least expensive device to which to transfer given data. According to D2, the state notifications also reduce the network polling load by initiating each poll.

WO0143390 (D3), published 14 June 2001, discloses a service management access node. According to D3 an access node has a portal which performs interfacing between a wireless network domain and content/service providers in the Internet. In D3, on the wireless side the portal is linked with an SMSC, a CBC, and a USSD server for interfacing with and management of bearer stacks. According to D3, service functionality includes modular systems including a Push server, a Pre-paid calling server, and a location server in addition to internal portal functions. In D3, the latter provide for subscriber self-provisioning, customer care provisioning, subscriber device provisioning, and service provisioning. According to D3, the node caters for both particular subscriber service and mobile device requirements.

WO 00/77654 (D4), published 21 December 2000, discloses a method and apparatus for creating services. According to D4, D4 provides the ability to easily create a module/mechanism (referred to as a template in D4) that produces code that may be utilized to create a web service.

### BACKGROUND OF THE INVENTION

The modern communications era has brought about a tremendous expansion of wireline and wireless networks. Computer networks, television networks, and telephony networks are experiencing an unprecedented technological expansion, fueled by consumer demand.

Wireless and mobile networking technologies have addressed related consumer demands, while providing more flexibility and immediacy of information transfer.

Current and future networking technologies continue to facilitate ease of information transfer and convenience to users. The proliferation of local, regional, and global networks such as the Internet has availed a sea of information to society. These networking technologies have expanded to increasingly include wireless and mobile technologies. Through these networks, information can be downloaded to desktop systems, wireless systems, mobile systems, etc. For example, information available via the

Internet can now be downloaded onto mobile wireless units, such as cellular telephones, personal digital assistants (PDAs), laptop computers, etc. One such technology facilitating the transfer of Internet content to and from wireless devices is the Wireless Application Protocol (WAP), which integrates the Internet and other networks with wireless network platforms. Generally, WAP is a set of protocols that accounts for characteristics and functionality of both Internet standards and standards for wireless services. It is independent of wireless network standards, and is designed as an open standard. WAP bridges the gap between the wireline Internet paradigm and the wireless domain, to allow wireless device users to enjoy the benefits of the Internet across both platforms.

Second generation wireless service, often referred to as 2G wireless service, is a current wireless service based on circuit-switched technology. 2G systems, such as Global System for Mobile communications (GSM) and Personal Communications Services (PCS), use digital radio technology for improved quality and a broader range of services over first generation mobile technologies. 3G, or third generation, refers to a set of digital technologies that promises improvements in capacity, speed and efficiency by deploying new packet-based transmission methodologies between terminals and the network. Users of 3G devices and networks will have access to multimedia services such as video-on-demand, video conferencing, fast web access and file transfer. Existing and future services are, and will continue to be, provided by network service operators who make services and applications available to mobile device users via the network.

These services/applications hosted by network servers often require certain information to enable a user to properly utilize the application. For example, the user may need to be authorized to use the application, and/or the user may need to be charged for use of the application. Further, the application may need to know the whereabouts of the terminal user, particularly in the case of a wireless terminal that can roam from location to location. These and other "added value" functions are often performed by other services available on the collaboration of networks.

However, creating service provision infrastructure solutions that are capable of accessing the added value available in the network infrastructure has inherent challenges. Accessing functionality of the wireless (or wired) networks is cumbersome due to a multitude of standards, technologies, and vendor-specific functionality in the network elements. With "convergence," the environment is further complicated. The service provision infrastructure (SPI) might not be specially created, for example, for cellular networks, but rather it may be a solution in the web domain. In such cases, considerable investment has to be made in the SPI solution to ensure that it can interface with the various networks to access the added value from the networks. This presents a problem where the vendor of the SPI solution (i. e., application server) needs to take into account differences in the network systems, and differences in solutions from multiple network element vendors.

Accordingly, there is a need in the network communications industry to simplify access to functionality available from the networks, whether fixed or wireless networks, including mobile networks, wireless LANs, etc. The present invention solves these and other shortcomings of the prior art, and offers numerous advantages over prior art systems and methodologies,

### SUMMARY OF THE INVENTION

The present invention is directed to a system and method for facilitating access to service functionality available on landline and/or wireless networks. According to the invention there is provided a web services push gateway according to claim 1.

According to the invention there is provided a network system according to claim 13.

According to the invention there is provided a method according to claim 14.

According to the invention there is provided a computer program according to claim 15.

Preferred embodiments are defined in the dependent claims.

In accordance with one embodiment of the invention not currently claimed in independent form, a network system is provided for facilitating access to functionality available on one or more networks. The network system includes one or more terminals operable in a network, and a network infrastructure comprising one or more network systems. Network applications operate within a service provision infrastructure for use by the terminals. At least one network service broker is provided, which includes a loosely-coupled interface exposed to the service provision infrastructure, for brokering added-value network services from the terminals and/or network systems to the service provision infrastructure.

In more particular embodiments, the loosely-coupled interface is a standardized interface, such as an Extensible Markup Language (XML) interface, or more particularly a Web Services interface. The network service broker may be network-coupled brokers, terminal-coupled brokers, or a hybrid. The network service brokers may take on a variety of forms and functions, including, but not limited to, an authentication broker to access authentication services for use by the network application, a charging broker to access a charging/billing service in connection with use of the network application, a location broker to access a terminal location service to allow a location of the terminal to be provided to the network application, a content ordering broker to store subscription information to a profile register and to verify subscription intentions of an end-user of the terminal, a presence broker to access a presence service to allow user presence information to be provided to the network application, a client provisioning broker to broker provisioning of mobile terminals, a notification broker to facilitate pushing content to the terminals, and a privacy broker to access end-user privacy information.

In accordance with another embodiment of the invention not currently claimed in independent form, a method for providing network applications access to service functionality available via one or more networks is provided. The method includes providing at least one network-coupled network service broker logically between one or more network infrastructures and a service provision infrastructure operating on top of the network infrastructures. A loosely- coupled interface of the network service broker is exposed to the service provision infrastructure. Access by the network applications to value-added services within the network infrastructures is facilitated via the loosely-coupled network service broker interface.

In accordance with another embodiment of the invention not currently claimed in independent form, a method for providing network applications access to service functionality available via one or more networks is provided, where a terminal-coupled network service broker is provided. The terminal-coupled network service broker is logically located between one or more terminals and a service provision infrastructure operating on top of a network infrastructure. A loosely-coupled interface of the network service broker is exposed to the service provision infrastructure, and access by the network applications to value-added services provided at least in part by the terminals is exposed to the service provision infrastructure via the loosely-coupled network service broker interface. In accordance with another embodiment of the invention not currently claimed in independent form, the network service broker is a hybrid of the network-coupled and terminal- coupled network service brokers, such that access by the access by the network applications is facilitated via the loosely-coupled interface to the value-added services provided via one or both of the terminals and the network infrastructures.

The network service brokers of the present invention are also beneficial in the context of mobile terminal roaming. In accordance with another embodiment of the invention not currently claimed in independent form, a method is provided for providing network applications that operate within a service provision infrastructure access to service functionality available via a visited network in which a user of a terminal has roamed. The method includes providing a use authorization voucher to a visited network service broker associated with the visited network. The service provision infrastructure receives an address of the visited network service broker from a home network service broker associated with a home network. The home network service broker exposes a loosely- coupled interface to the service provision infrastructure to facilitate communication therebetween. The visited network service broker is accessed by the service provision infrastructure using the address of the visited network service broker. Access by the service provision infrastructure to the service functionality available from the visited network is facilitated via a loosely-coupled interface of the visited network service broker that is exposed to the service provision infrastructure. In accordance with another roaming embodiment of the invention not currently claimed in independent form, a method is provided for providing network applications that operate within a service provision infrastructure access to service functionality available via a visited network in which a user of a terminal has roamed. In this case, a roaming agreement has been established between the visited network and a home network of the user of the terminal. The method includes communicating between the service provision infrastructure and a home network service broker associated with the home network via a loosely-coupled interface of the home network service broker exposed to the service provision infrastructure. The method further includes communicating between the home network service broker and a visited network service broker associated with the visited network, wherein the home network service broker serves as a proxy in accessing the service functionality available via the visited network. In still another roaming embodiment, a method is provided for providing network applications that operate within a service provision infrastructure access to service functionality available via a visited network in which a user of a terminal has roamed, wherein a roaming agreement has been established between the visited network and the service provision infrastructure. The method includes providing a visited network service broker logically between the visited network and the service provision infrastructure operating on top of a network infrastructure, and exposing a loosely-coupled interface of the visited network service broker to the service provision infrastructure. Access by the service provision infrastructure to the service functionality available from the visited network is facilitated via the loosely-coupled interface of the visited network service broker.

In accordance with another embodiment of the invention not currently claimed in independent form, a network service broker for facilitating access by a service provision infrastructure to service functionality available via one or more networks is provided. The network service broker includes an interface to access the service functionality from a network infrastructure. The network service broker further includes a loosely-coupled interface exposed to the service provision infrastructure, where the loosely-coupled interface comprises a Web Services-based interface having Extensible Markup Language (XML) schemata built on top of a Web Services platform to expose the service functionality available via the network.

The above summary of the present invention is not intended to describe each illustrated embodiment or implementation of the present invention. This is the purpose of the figures and the associated discussion which follows.

### BRIEF DESCRIPTION OF THE DRAWINGS

The invention is described in connection with the embodiments illustrated in the following diagrams.
FIG. 1 is a block diagram generally illustrating the incorporation of a network service broker in accordance with one aspect of the invention;
FIG. 2 illustrates an example of how a service application in the service provision infrastructure (SPI) can benefit from such loosely-coupled interfaces and the resulting added value exposed by the network service brokers to the SPI;
FIG. 3 illustrates a variety of representative network service brokers that may be implemented in accordance with the present invention;
FIG. 4 illustrates a general network service broker architecture in accordance with the principles of the present invention;
FIG. 5 is an exemplary embodiment of a network environment implementing an authentication broker in accordance with the present invention;
FIG. 6 is an exemplary embodiment of a network environment implementing a charging broker in accordance with the present invention;
FIG. 7 is an exemplary embodiment of a network environment implementing a location broker in accordance with the present invention;
FIG. 8 is an exemplary embodiment of a network environment implementing a content ordering broker in accordance with the present invention;
FIG. 9 is an exemplary embodiment of a network environment implementing a content delivery broker in accordance with the present invention;
FIG. 10 is an exemplary embodiment of a network environment implementing a presence broker in accordance with the present invention;
FIG. 11 is a diagram of a representative profile register;
FIG. 12 is an exemplary embodiment of a network system which provides a Web Services notification broker in accordance with the principles of the present invention;
FIG. 13 is a block diagram illustrating an exemplary embodiment of a Web Services push gateway architecture in accordance with one embodiment of the present invention;
FIG. 14 illustrates an exemplary implementation of a broker domain/Web Service logic interface;
FIG. 15 illustrates an exemplary embodiment of a Web Service logic/API interface;
FIG. 16 illustrates an exemplary embodiment of a terminal/broker domain interface;
FIG. 17 illustrates one embodiment of the use of multiple network service brokers for multiple network operators;
FIG. 18 illustrates an exemplary implementation of an interface broker in accordance with the principles of the present invention; and
FIG. 19 illustrates an exemplary manner in which roaming issues can be managed using network service brokers in accordance with the present invention.

### DETAILED DESCRIPTION OF THE ILLUSTRATED EMBODIMENTS

In the following description of the various embodiments, reference is made to the accompanying drawings which form a part hereof, and in which is shown by way of illustration various embodiments in which the invention may be practiced. It is to be understood that other embodiments may be utilized, and structural and functional modifications may be made without departing from the scope of the present invention.

The present invention is directed to a system and method for facilitating access to functionality available on landline and/or wireless networks. The present invention implements network service brokers which simplify access to functionality available on various networks, either fixed or wireless. The network service brokers expose a loosely-coupled standard Web Service interface (or other standardized interface) towards the service provision infrastructure, and implement a well-defined enabling service.

Conventionally, the communication between terminals and the service provision infrastructure solutions takes place on top of the network infrastructure using standard connectivity methods. Creating service provision infrastructure solutions that are capable of accessing continuously provided "added value," such as location or presence information available in the network infrastructure, is inherently challenging. Accessing functionality of wireless or wired networks is cumbersome due to the various standards, technologies, and vendor-specific functionality that is, and will continue to be, associated with network elements. Convergence further complicates the issue. The service provision infrastructure may not be specifically created for a particular network, such as a cellular network, but rather is may be a solution in the Web domain. In such cases, considerable investment would have to be made in the Service Provision Infrastructure (SPI) solution to ensure that it can interface with the various networks to access any added value available via the networks. This problem faces the developers who host applications in the SPI, who thus need to take into account the differences in the various network systems, network element vendors, etc.

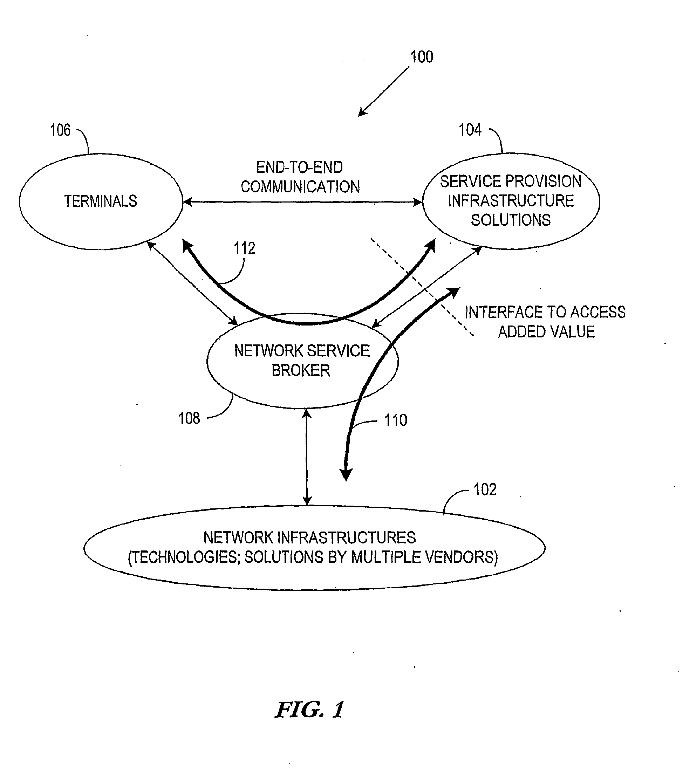

These challenges may be solved through the use of one or more network service brokers in accordance with the present invention. FIG. 1 is a block diagram generally illustrating the incorporation of a network service broker in accordance with one aspect of the invention. The network environment 100 includes various network infrastructures 102, which generally includes the various network technologies and solutions provided by various vendors. The environment 100 of FIG. 1 also includes Service Provision Infrastructure solutions 104, which represents the infrastructure from which application servers may provide applications and services on a particular network. The terminals 106 represent the various terminals that may be used on networks, including (for example), desktop and portable computers and terminals, cellular and other wireless telephones, personal digital assistants (PDA), or any other type of terminal that can communicate via a network.

In accordance with the present invention, one or more network service brokers 108 are provided in the network environment 100. The network service broker 108 may provide various functions. One function of the network service broker 108 includes is to expose a loosely-coupled interface (e.g., Web Services interface) towards the SPI 104, while another is to implement or facade a well-defined enabling service. The network service broker 108 can expose the services through the agreed interfaces without disclosing the underlying end-to-end implementation. The service broker helps operators open their services to external applications, and provide access to a particular network domain's (e.g., mobile domain) added value. The service broker also enables the operator to charge the SPI for information that is provided to the SPI. If the information is provided from the broker to the terminal, then the end user may ultimately be charged for the service. When the broker provides services to brokers in other networks, then roaming related charging can take place. In one embodiment, the loosely-coupled interface to the SPI 104 is a "standardized" or otherwise agreed-upon Web Services interface, described more fully below.

The "added value" may originate from a network, terminal, or distributed functionality between the network and terminal. For example, the added value may be buried in today's mobile network infrastructure, in fixed networks, in networks utilizing unlicensed band wireless technologies, and the like. In a more particular example in the location services context, location information in company intranet and/or particular Internet hot spots with unlicensed band wireless technology, or location information in fixed company intranets, is known to the system but there is not necessarily a way to access it. In accordance with the invention, the brokers can thus be created for unlicensed band, or even for fixed Internet access.

As described above, one embodiment of the network service broker includes a Web Service interface towards the SPI 104 which may be defined in Extensible Markup Language (XML). Web Services are network-based (particularly Internet-based) modular applications that perform a specific task and conform to a specific technical format. Web Services are represented by a stack of emerging standards that describe a service-oriented, component-based application architecture, collectively providing a distributed computing paradigm having a particular focus on delivering services across the Internet. Generally, Web Services are self-contained modular applications that can be published in a ready-to-use format, located, and invoked across the World Wide Web. When a Web Service is deployed, other applications and Web Services can locate and invoke the deployed service. They can perform a variety of functions, ranging from simple requests to complicated business processes.

Advantageously, Web Services are accessed via ubiquitous Web protocols and data formats, such as Hypertext Transfer Protocol (HTTP) and Extensible Markup Language (XML). Thus, at present, the basic Web Service platform is XML plus HTTP, and other protocols may be utilized in addition such as SOAP for RPC, WSDL for service interface description, UDDI for discovery of services, etc. XML is a text-based markup language that is currently used extensively for data interchange on the Web. As with HTML, data is identified using tags, which are collectively known as "markup". XML tags identify the data, and act as a field name in the program. XML is a language that allows complex interactions between clients and services, as well as between components of a composite service, to be expressed. HTTP is an application protocol, and more particularly is a set of rules for exchanging files (text, graphic images, sound, video, and other multimedia files) on a network such as the World Wide Web. While the examples set forth herein are generally described in connection with XML and HTTP, it should be recognized that this is for illustrative purposes, and current and future types of protocols and data formats may also be employed.

More specifically, Web Services represent a collection of several related technologies, and involve connections between at least two applications, such as a remote procedure call (RPC), in which queries and responses are exchanged in XML over HTTP. Web Service technologies may be defined in terms of various technology layers. The core layers include a transport layer, such as TCP/IP or HTTP as previously described, in which XML messages may be communicated. An XML messaging layer, such as Simple Object Access Protocol (SOAP) also represents a core layer of Web Services. SOAP is a protocol specification that defines a uniform manner of passing XML-encoded data, as well as defines a manner to perform RPCs using HTTP as the underlying communication protocol.

Higher level layers of the Web Services stack include a service discovery layer, which may include technologies such as the Web Services Description Language (WSDL) and Universal Description, Discovery, and Integration (UDDI). WSDL is an XML-based description defining how to connect to a particular Web Service, and thus indicates how service providers are to describe the basic format of Web Service requests over different protocols or encodings. It is used to describe what a Web Service can do, where it resides, and how to invoke it. UDDI provides a manner in which clients can dynamically locate other Web Services. It represents a set of protocols and a public directory for the registration and real-time location of Web Services and other business processes. UDDI provides a manner for Web service providers to register themselves, and provides a manner for an application to find, connect to, and interact with a particular Web Service. Other higher level layers of the Web Services stack may include a workflow layer. A workflow layer may include a technology such as the Web Services Flow Language (WSFL). WSFL is an XML language for the description of Web Services compositions, and allows for recursive compositions of Web Services within others to create more complex features built upon existing Web Services.

The aforementioned, and other, technologies, protocols, data formats, etc. may be used in employing Web Services. However, these known technologies are referenced in order to provide exemplary technologies currently available in the development and use of Web Services. The invention thus may utilize these known technologies, but is also applicable to other existing and/or future technologies, as will be readily apparent to those skilled in the art from an understanding of the description provided herein.

Referring again to FIG. 1, the network service broker 108 may include network-coupled brokers that communicate with network elements in the network infrastructures 102, as represented by line 110. This allows complexities caused by differences in network elements from multiple vendors or sources, and caused by differences between network infrastructures in general, to be hidden. One embodiment of a network-coupled broker includes a Web Service interface towards the SPI 104, where the Web Service interface is defined in XML. Such an exemplary XML interface enables hiding network type and network element differences. For example, differences between various types of networks, such as fixed/wired and wireless (e.g., wireless LAN, Bluetooth, mobile/cellular, etc.) networks, can be hidden. In the case of a mobile network, various network sub-types exist, such as Global System for Mobile Communications (GSM), Wideband Code-Division Multiple Access (WCDMA), etc., the differences of which can also be hidden. In the case of network elements, the specific protocols to utilize the added value of the network can be hidden. For example, the Nokia-specific Computer Interface to Message Distribution (CIMD) interface protocol of a Short Message Service Center (SMSC) may be hidden from the SPI 104 in the case of a notification broker, an exemplary embodiment of which is described more fully below.

The network service broker 108 may include terminal-coupled brokers that communicate with devices represented by the terminals 106, as represented by line 112. The terminal-coupled brokers communicate with the terminal 106 and expose the service(s) or functionality(s) available as the cooperation of the broker and the terminal. In one embodiment, this interface is defined in XML. The XML interface enables the identification of the terminal type in a common or standard way, regardless of the protocol used between the terminal and the broker for the identification. It also enables configuration of the terminal in a common way, independent of the specific protocol utilized by terminal vendors for configuring the terminal. The terminal-coupled broker(s) can also hide differences in the protocol set utilized by the terminals, such as differences in protocol sets for communicating presence information with the network.

Brokers may be contemporaneously serving as network-coupled and terminal-coupled brokers. In such cases, the functionality is distributed between the network and the terminals, and the broker provides the added value as the sum of functionality in both. Further, the terminal may communicate with the network service broker to access added value of the network through the same interface as which the SPI 104 utilizes.

The various brokers associated with the network service broker in accordance with the present invention also include a management interface for one or more Management Systems or other Operations Support Systems (OSS) (not shown). This management interface may provide various interfaces and services, including broker surveillance, broker statistics, broker configuration tool, and Customer Care & Billing (CCB) or other charging/billing system interface. The broker surveillance refers to the monitoring of broker process status and functioning. Broker statistics refers to the statistics offered by brokers regarding their usage, transaction quantity, response times, etc. The broker configuration tool may preferably be a Web interface for the broker to be used by system administrators to carry out configuration activities. With respect to the CCB system interface, it would be desirable that all subscriber-related information reside in a profile register. However, that type of architecture would tie the release cycle of all brokers with the release cycle of such a profile register, which is highly undesirable in practice. Therefore, there may be broker-specific subscriber information storage in some of the brokers, and that information is often maintained via the CCB system. In such a case, the broker can include a CCB system interface to obtain this information.

The network service broker can further hide complexities surrounding roaming issues. When a wireless user is roaming in an area outside the home network, the services in the visited network may need to be accessed. Typically, the user does not have a business relationship with the visited network to which the user has roamed within. Rather, the home network operator has a business relationship (e.g., roaming agreement) with the visited network. The same approach can be extended to services provided by brokers in the home network, in accordance with the present invention. An example of such a roaming case is provided below.

Thus, the network service broker provides the network operator with a controlled way of exposing the functionality or information available in the network. Brokers enable the owner of the network to protect the privacy of the end user to whom the information or functionality is associated (e.g., location information, identity, etc.) based on the end user preferences. Brokers further enable the owner of the network to charge the service provider, end user, or other party receiving the added value. The brokers allow complexities caused by differences in network elements from multiple vendors or sources, and caused by differences between network infrastructures in general, to be hidden.

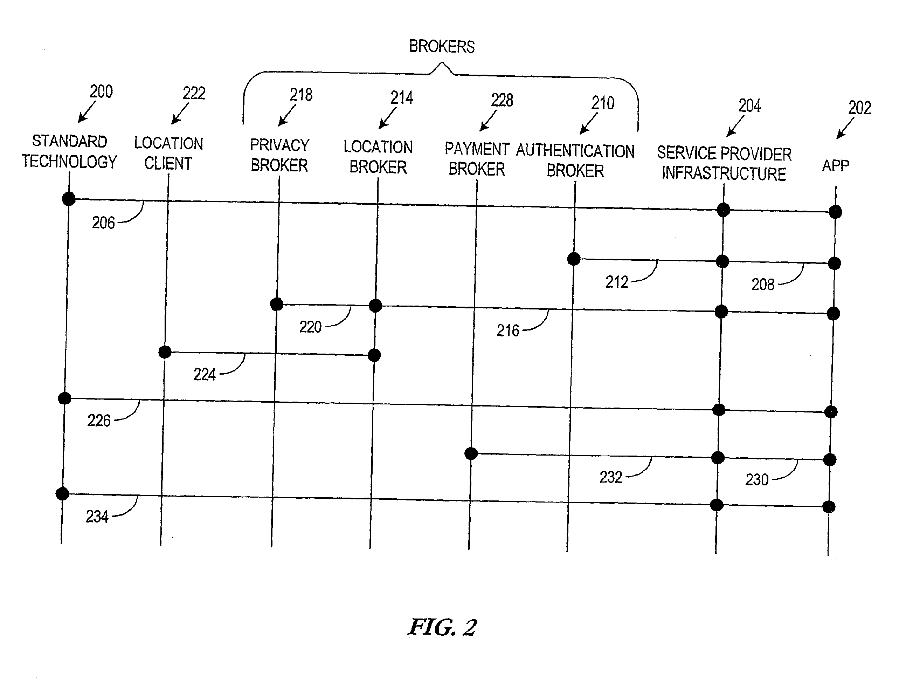

In one embodiment, the network service brokers in accordance with the present invention provide access to a mobile domain's added value. This added value may originate from network, terminal, or distributed functionality between the network and terminal. Network service brokers in accordance with the present invention do not disrupt the communication between terminals and the SPI, as these brokers enable access to the mobile domain's added value through open, loosely-coupled interfaces. Conventional application design depends upon a tight interconnection of all subsidiary elements. In such a case, developers must thoroughly understand and have control over both ends of the connection. In a loosely coupled system, the implementation at either end of a connection can be changed and the application will continue working. Current technological implementations of loosely-coupled systems includes using message-based, asynchronous technology for robustness, and further using ubiquitous protocols such as HTTP, SMTP, XML. Future technological solutions will also facilitate loosely-coupled interfaces. In loosely coupled systems, discovery of the network resources/services is an issue. One current manner of locating such a service is through a UDDI operator, which is a listing of published services. FIG. 2 illustrates an example of how a service application in the SPI can benefit from such loosely-coupled interfaces and the resulting added value exposed by the network service brokers to the SPI.

A terminal employing standard technology 200 (e.g., WAP, SyncML, MMS, Java, etc.) connects with the service/application 202 provided by the SPI 204, as shown by line 206. The service 202 requests identity associated with the terminal from the SPI 204 as shown on line segment 208, and the SPI 204 in turn contacts an authentication broker 210 in the intelligent edge of the network that the terminal is located in, as shown by line segment 212. The authentication broker 210 provides the service application 202 with the means to uniquely identify the terminal for the current session.

The application 202 requests location of the terminal by providing the location broker 214 with the unique identifier received from the authentication broker 210. This request is illustrated via line 216. The location broker 214 communicates with the privacy broker 218 as shown by line segment 220, requesting permission to provide the location of the terminal to the service application 202. Depending on the policy set by the end user, the privacy broker 218 may function in one of many possible ways, such as deny the request as default, accept the request as default, accept if the application 202 can be uniquely identified and has been granted access to the location information, prompt the end user for permission to release the information, etc. Stated another way, the privacy broker 218 and/or associated privacy service provider can have a role where information and functionality that various other brokers expose from the network in question to service provision infrastructures is automatically "privacy protested," such that, for example, the location broker requests from the privacy broker/privacy service provider associated with the user whether the user has approved or needs to approve releasing the privacy information.

The location broker 214 can obtain the positioning information from a location client 222, as shown on line 224. The positioning information provided by the location broker 214 may be based on the capability in the network, such as Enhanced Observed Time Difference (E-OTD) location technology. Alternatively, the positioning information may be based on capability provided in the terminal, such as Global Positioning System (GPS) location technology. Regardless of where the positioning information originated, the location broker 214 may provide this information to service applications, provided that the privacy broker 218 accepts such a transaction.

The service application 202 that has received location information through the SPI 204 can now provide location aware/based service to the terminal utilizing the standard technology 200, as shown on line 226.

Another example includes the use of a payment broker 228, which may be invoked where the terminal user requests a chargeable service from the service application. In such a case, the service application 202 has possession of the previously provided unique identifier for the terminal. By providing this identification to the SPI 204 via line segment 230, the SPI 204 further communicates with the payment broker 228 as shown on line segment 232, requesting creation of a billing record that matches the requested payment. Communication utilizing the standard technologies 200 can then continue, as illustrated by line 234.

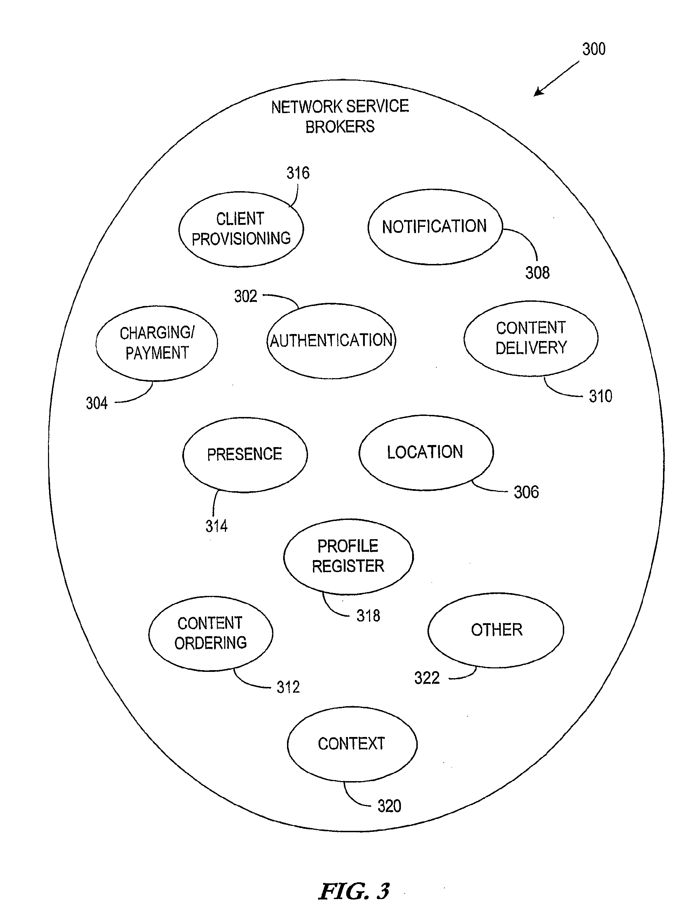

As illustrated in the example of FIG. 3, a variety of different network service brokers may be implemented in accordance with the present invention. FIG. 3 illustrates a number of representative network service brokers 300. The authentication broker 302 offers authentication services, and the charging/payment broker 304 facilitates the charging of services to the subscriber. The location broker 306 facilitates determination of the subscribers' location. Notification 308 and content delivery 310 brokers offers services for applications to push content, such as multimedia messages, to subscribers. The content ordering broker 312 offers a means for service providers to offer digital content subscribing. The presence broker 314 maintains subscriber dynamic status information, and the client provisioning broker 316 facilitates the provisioning of mobile clients. The profile register 318 includes information regarding the subscriber service, and the type of rights that the subscriber has granted to service providers. The context broker 320 can be used to provide context information to the service provision infrastructure for creation of applications that are aware of the context of the end user, where context refers to the context in which the end user is with his/her terminal. Other 322 brokers may also be utilized.

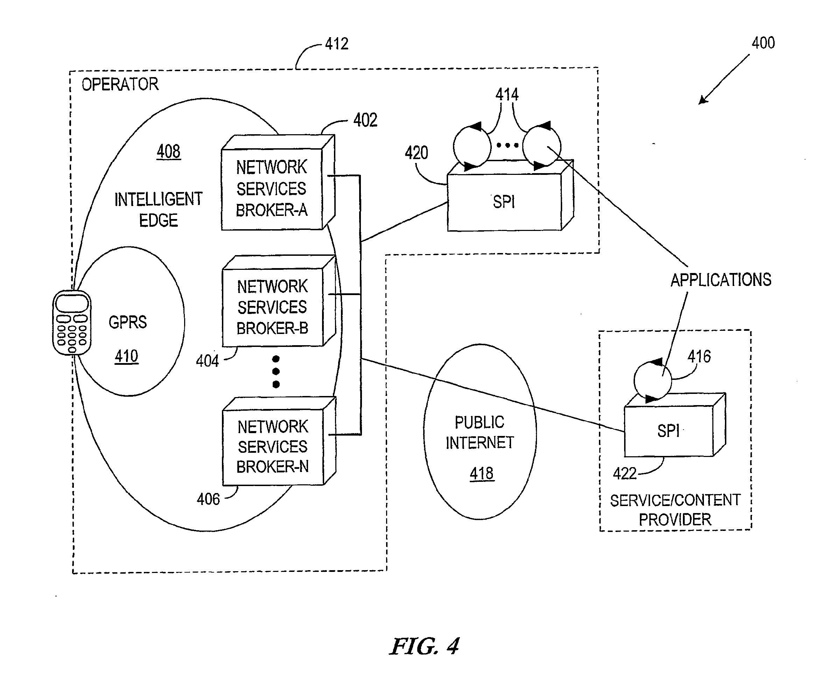

FIG. 4 illustrates a general network service broker architecture 400 in accordance with the principles of the present invention. In the architecture, the various network service brokers 402, 404, 406 form part of the intelligent network edge 408 surrounding a General Packet Radio Service (GPRS) 410 or other wireless communication network. The network service brokers 402, 404, 406 offer enabling services to either the operator's 412 own applications 414, or external service/content providers' applications 416 via the Internet 418 or other public network. In either case, the applications 414, 416 run on top of the SPI 420, 422 respectively, where the SPIs 420, 422 offer local services to applications, as well as provide Application Programming Interfaces (API) to the network service brokers.

As described in connection with FIG. 3, a variety of different network service brokers may be implemented in accordance with the present invention. A number of different exemplary network service broker architectures are described below.

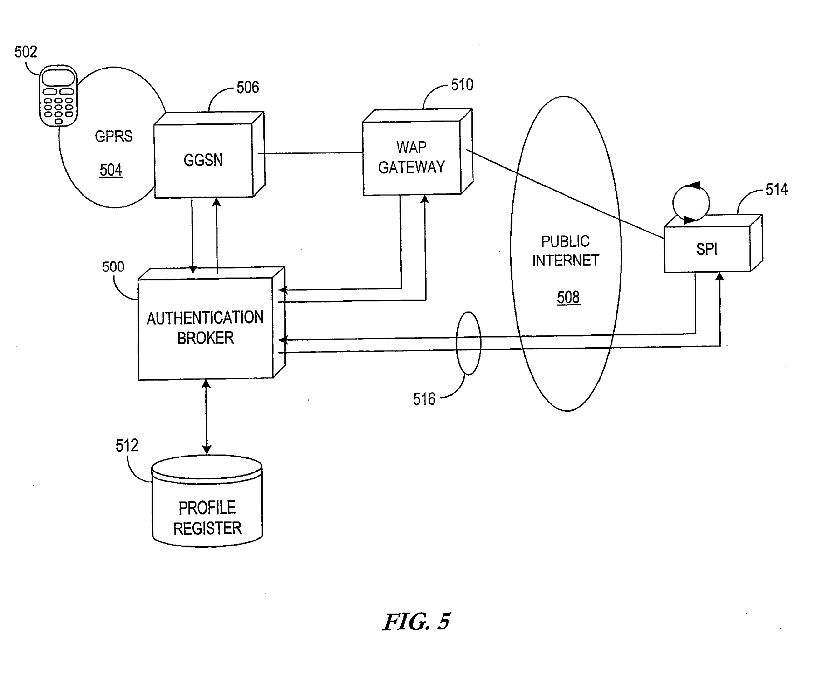

FIG. 5 is an exemplary embodiment of a network environment implementing an authentication broker 500. In one embodiment, the authentication broker solution involves client authentication based on terminal Internet Protocol (IP) addresses. Client authentication may also be provided based on other technologies and protocols., such as SSL/TSL (Secure Socket Layer/Transport Socket Layer). As is known in the art, SSL is a method of ensuring secure communication between two points on the Internet, such as a web browser and a web server. TSL also ensures secure communications, and includes advanced methods of controlling privacy and security. For purposes of illustration and not of limitation, the description associated with FIG. 5 assumes client authentication based on terminally addresses.

The present example assumes that a terminal 502 is operating in connection with a GPRS 504 wireless communication service. A GPRS attach procedure is a mobility management function that establishes a connection between the terminal 502 and the network 504. The Gateway GPRS Support Node (GGSN) 506 is a support node that acts as a gateway between the GPRS network 504 and a packet-switched public network such as the Internet 508. When the terminal 502 makes a GPRS attach, the IP address/MSISDN number pair is stored into the authentication broker 500. The MSISDN (Mobile Station ISDN/PSTN Number) is a mobile number used by GSM/DCS networks that contains information such as the country code, nafiional destination code, Home Location Register (HLR) identifier and a subscriber identifier (ID). When the subscriber accesses a service, the WAP gateway 510 requests the subscriber ID from the authentication broker 500 using, for example, the source IP address as a key.

The authentication broker 500 queries the profile register 512 to determine the proper form in which the subscriber ID is to be provided to the particular service in which the subscriber is attempting to access. The subscriber ID may be provided in a variety of formats, including an MSISDN number, a virtual subscriber ID (VSI), etc. VSI formats may also include alternate formats, including a VSI that remains valid over several sessions, over a certain period of time, or over a particular WAP session. The subscriber ID returned from the profile register 512 is provided to the application server 514 via the WAP gateway 510. In one embodiment, the subscriber ID may be provided in an HTTP header.

In one embodiment, the application server 514 may request additional authentication-related information or services from the authentication broker 500 as illustrated by communication path 516. In order to make this request, the application server 514 may utilize the VSI that it obtained via the HTTP header. Such a request may be, for example, a request for the MSISDN number, a user name or address, a request to obtain a permanent VSI for subsequent push service use, a request to lengthen the time period in which the VSI is valid, etc. When an application server 514 makes such a request for additional information, the authentication broker 500 queries the profile register 512 to determine whether the application server 514 is authorized to request that particular information or service.

In the embodiment of FIG. 5, the client authentication may be based on the source IP address. This provides sufficient security, as the user traffic between the terminal 502 and the GGSN 506 is communicated via a tunnel, i.e., a secure communication path. This makes it possible in the GGSN 506 to filter IP packets that do not have the IP address allocated to the terminal 502. Furthermore, as there is a virtual private network (VPN) between the WAP gateway 510 and the application server 514, the subscriber ID remains untouched.

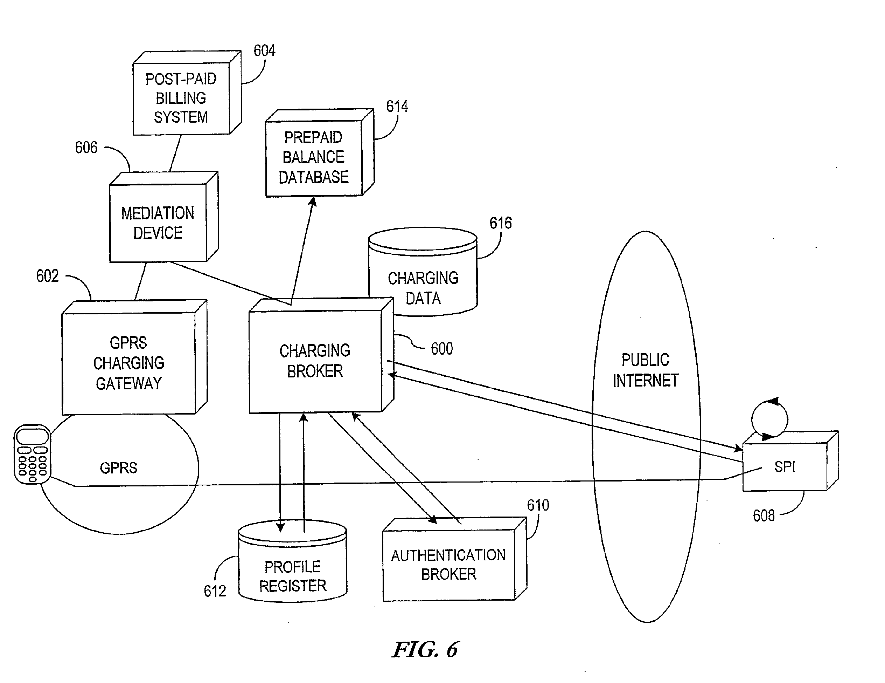

FIG. 6 is an exemplary embodiment of a network environment implementing a charging broker 600. The general charging and billing system I may include a GPRS charging gateway 602 that collects charging records, such as call-detail records (CDRs), from Gateway GPRS Support Nodes (GGSN) or other support nodes, and forwards them to a billing system after consolidating the CDRs and converting them to a suitable format. In one embodiment, the charging records may be provided to the postpaid billing system 604 via the mediation device 606, which is used to interconnect such operations support systems (OSS).

In accordance with the exemplary embodiment illustrated in FIG. 6, the application server 608 makes a request for a billing service via the charging broker 600. This request may be made from the SPI 608 to the charging broker 600 using the virtual subscriber ID received via the authentication broker 610, as was described in connection with FIG. 5. There are multiple types of services available via this interface, including an "advance-of-charge" functionality, where the application server 608 inquires whether the particular charge amount can be debited from a pre-paid subscriber account. Another service available is a post-paid functionality, where the charge amount is added to a subscriber's bill.

The charging broker 600 requests the actual subscriber ID from the authentication broker 610 using the virtual subscriber ID included in the charging request. The charging broker 600 then queries the profile register 612 to determine whether the application is authorized to bill the subscriber. If so, the charge is sent to the prepaid balance database 614 to be debited. If the prepaid balance is exhausted, a message indicated a denial of service is sent to the authorization broker 610. Alternatively, the charge may be stored in the charging database 616 to be subsequently provided to the post-paid billing system 604.

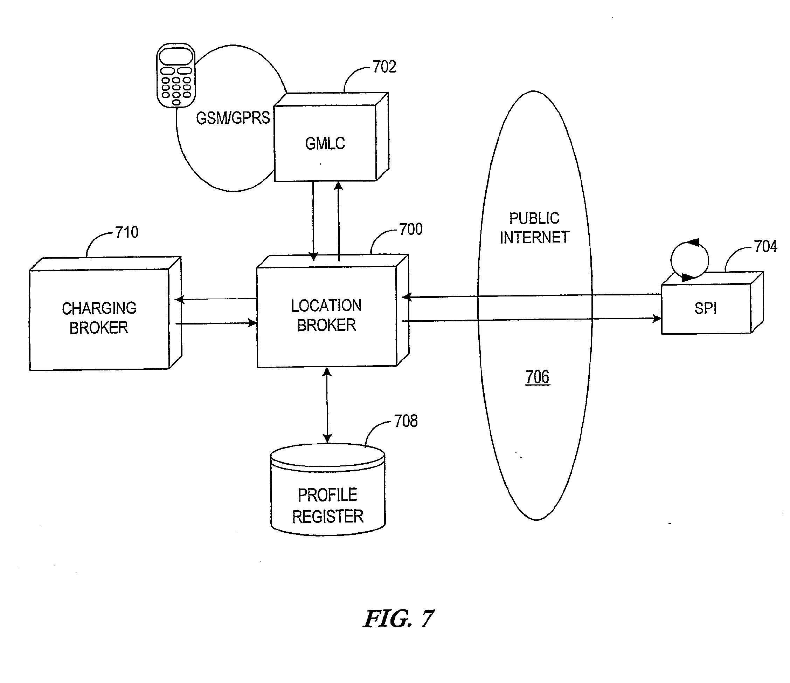

FIG. 7 is an exemplary embodiment of a network environment implementing a location broker 700. The location solution may be based on, for example, the Location Services (LCS) standard where the external interface to positioning infrastructure is offered by a standard Gateway Mobile Location Center (GMLC) 702. The GMLC 702 is a gateway that receives requests from location-based applications, requests mobile positioning information, and forwards mobile positioning information to location-based applications. However, the GMLC 702 does not offer the conceptual model used by the network service brokers, and a separate location broker 700 is required in this embodiment. For example, in the GMLC 702, the subscriber is identified by the MSISDN number, whereas the location broker 700 may use virtual subscriber IDs as described in connection with FIG. 5. Further, the broker may hide the differences of various network types that are not handled by GMLC 702. The broker can handle extracting location information, for example, from a company intranet extended with unlicensed technologies such as wireless Local Area Network (LAN), Bluetooth radio technologies, etc.

In the exemplary embodiment illustrated in FIG. 7, the application server 704 requests the subscriber location via the Internet 706 (or other network) using the virtual subscriber ID (VSI) as a key. The location broker 700 queries the profile register 708 to determine whether the application server 704 is authorized to request the subscriber's location information. The location broker 700 requests the subscriber location from the GMLC 702, and returns the location information to the application server 704. Optionally, the location broker 700 may send a charging ticket to the charging broker 710 to be added to the subscriber's or application's mobile service bill.

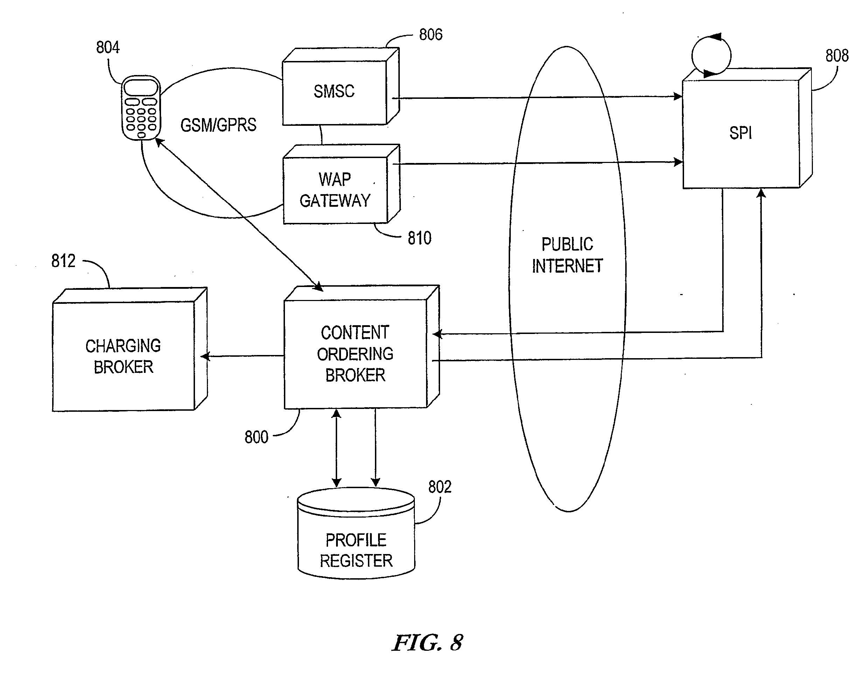

FIG. 8 is an exemplary embodiment of a network environment implementing a content ordering broker 800. The content ordering broker's 800 role includes offering an interface for content/service providers to store subscription information to the profile register 802, as well as carrying out the communication with the end-user of the terminal 804 to verify that the end-user is actually willing to subscribe.

One manner in which a subscriber may initiate the subscription processing is for the subscriber to send a message, such as using a Short Message Service (SMS) via the SMSC 806, along with a key word to a particular MSISDN number. The message is routed from the SMSC 806 to the application server 808 so that the subscriber's MSISDN number is replaced by a virtual subscriber ID. Another representative manner in which a subscriber may initiate the subscription processing is for the subscriber to browse to a WAP/Web site and place an order via the WAP gateway 810 to the SPI 808. In this case, the content/service provider receives the subscriber's virtual subscriber ID in the HTTP (or other) header.

Once the subscription processing is initiated, the application 808 sends the subscription information to the content ordering broker 800. The content ordering broker 800 queries the profile register 802 to determine whether the subscriber is allowed to subscribe to this kind of content. If so, the content ordering broker 800 requests the subscriber to verify whether the subscriber is actually willing to effect the transaction. The content ordering broker 800 stores the subscription information into the profile register 802, and may send a charging ticket to the charging broker 812.

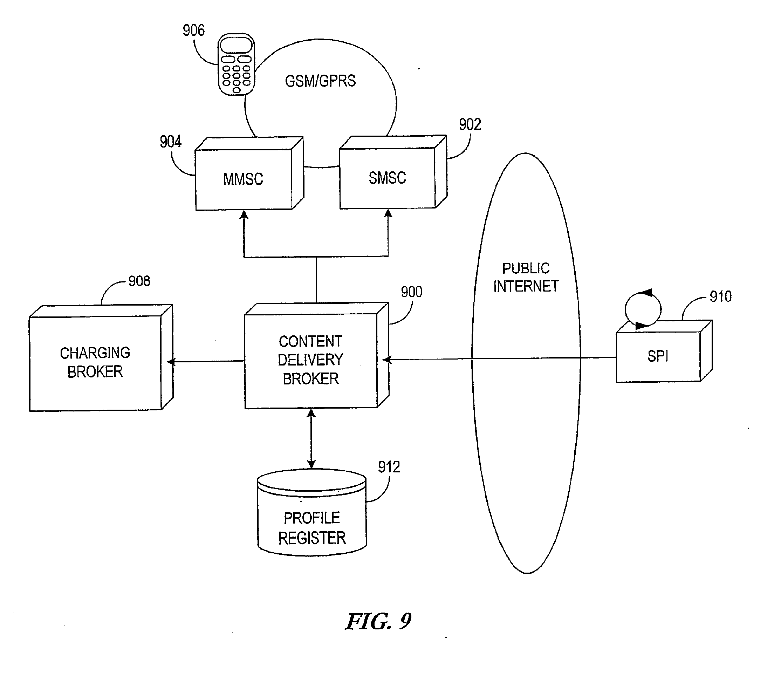

FIG. 9 is an exemplary embodiment of a network environment implementing a content delivery broker 900. Some network operators do not want to be the digital content reseller, but rather to just offer delivery and billing mechanisms for resellers. The content broker's 900 functionality includes at least screening unwanted content, selecting the delivery mechanism (e.g., SMS via the SMSC 902, MMS via the MMSC 904, or other depending on the subscriber's terminal 906 capabilities), and sending charging tickets to the charging broker 908.

The application server 910 sends digital content to the content broker 900. Prior to that, the application 910 may optionally inquire as to the terminal 906 capabilities and the subscriber's current status from the profile register 912 and presence broker (not shown) respectively. The content broker 900 queries the profile register 912 to determine at least: 1) whether the application server 910 is authorized to send that particular content to the subscriber; 2) whether the subscriber is allowed to receive the content (e.g., whether sufficient prepaid balance exists); and 3) what the subscriber's terminal capabilities are. The content broker then carries out the required content adaptations and sends the content using the bearer corresponding to the preferred delivery mechanism 902, 904.

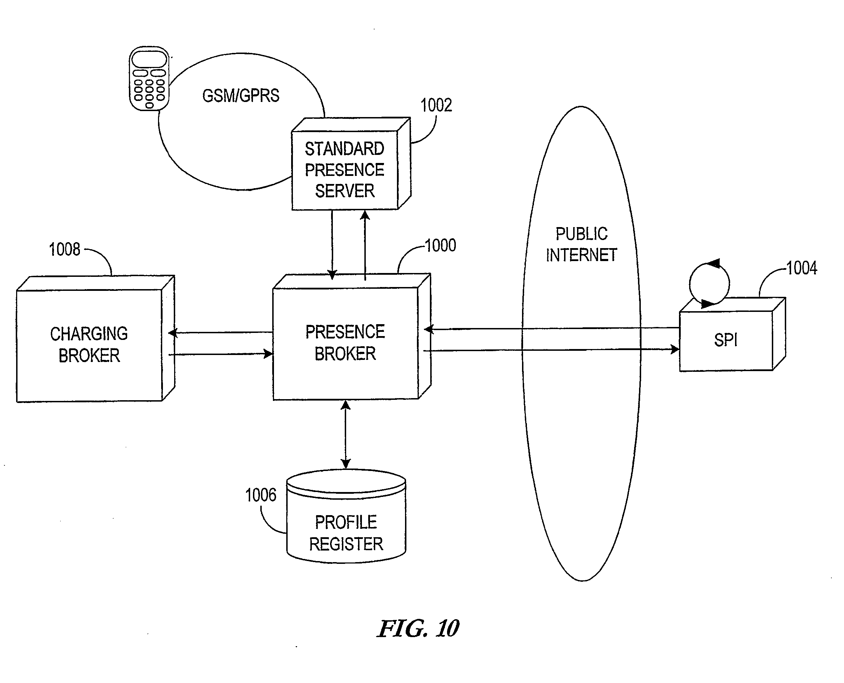

FIG. 10 is an exemplary embodiment of a network environment implementing a presence broker 1000. As was the case for the location broker example described above, the presence broker solution includes an industry standard server (standard presence server 1002) that offers a standard external interface, but does not follow the conceptual model offered by the network service brokers. Thus, a presence broker 1000 may be utilized even where a standard presence server 1002 is available in the network environment.

In the illustrated example, the application server 1004 requests the subscriber's presence status, or current "context," from the presence broker 1000 using the virtual subscriber ID as a key. The presence broker 1000 queries the profile register 1006 to determine whether the application server 1004 is authorized to request the subscriber's presence information. If so, the presence broker 1000 requests the subscriber presence information from the standard presence server 1002 and returns the presence information to the application server 1004. The presence information includes information such as whether the subscriber is online, and information regarding the characteristics of the terminal being used by the subscriber at that time. Optionally, the presence broker 1000 may send a charging ticket to the charging broker 1008 to be added to either the subscriber's or applications bill.

It should be recognized that the exemplary network service brokers and associated exemplary architectures described above are not limited to the network environments in which they are described. Rather, the examples provided above are illustrative of particular embodiments of broker implementations. The brokers may be used to simplify access to all functionality available on the networks, whether the networks are fixed or wireless, including mobile networks and networks such as wireless Local Area Networks (LANs).

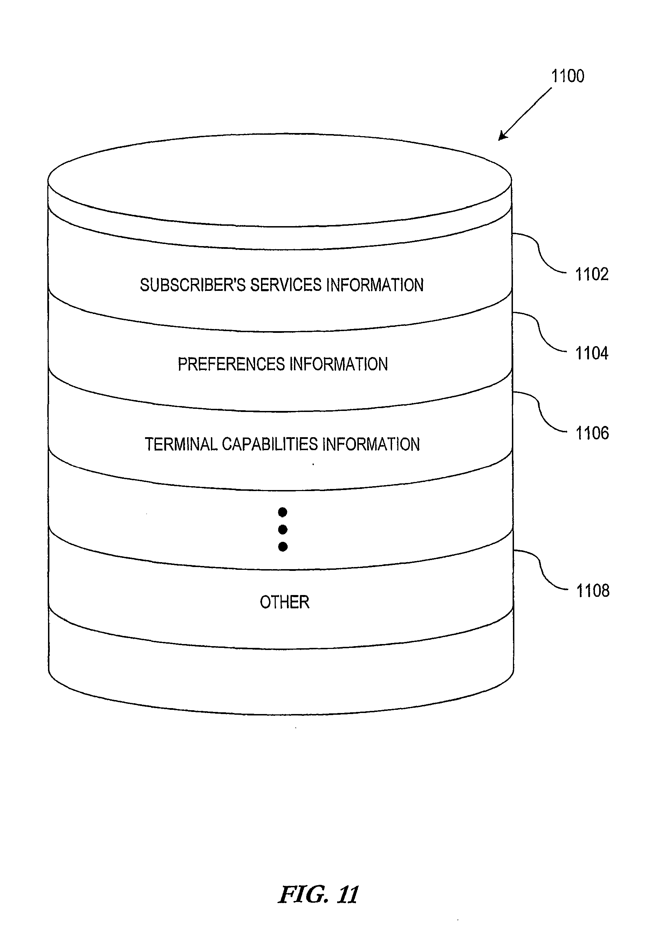

FIG. 11 is a diagram of a representative profile register 1100. The profile register 1100 stores information regarding subscribers' services 1102, preferences 1104, terminal capabilities 1106, and other 1108 information. As indicated in the previous examples, the profile register 1100 is routinely accessed by different network service brokers, but it also offers an external interface for content/service providers. Such an interface is used, for example, to carry various operations, such as inquire as to the subscriber terminal capabilities, inquire as to the various other services the subscriber has subscribed to, and to grant the user access to the particular service. Applications may use the profile register 1100 information for a variety of additional uses.

Another example of a network service broker is a notification or "push" broker. In a typical client/server model, a client requests a service or information from a server, which then responds in transmitting information to the client. Push technology generally refers to a means to transmit information to one or more devices without a previous user action. Thus, there is no explicit request from the client before the server transmits its information, and therefore push technology essentially includes server-initiated transactions. Push technologies can be used in connection with various protocols and communication technologies, such as SMS, MMS, WAP, Session Initiation Protocol (SIP), as well as others. Each of these current (and future) push technologies has its own particular characteristics, and therefore the generation and delivery of push messages to each of these different push technologies conventionally requires specialized knowledge applicable only to that technology. Current network applications that have the capability to push messages to recipient mobile devices are limited to technology-specific solutions. For example, an HTTP-SMS gateway only allows for a message to be sent from the Internet to an SMS-compliant terminal. With the continual increase of available push technologies, these brute force solutions become prohibitively undesirable, and present a significant obstacle for application developers who would prefer to focus on the development of the application, rather than determining how to push messages to an ever-increasing body of push technologies.

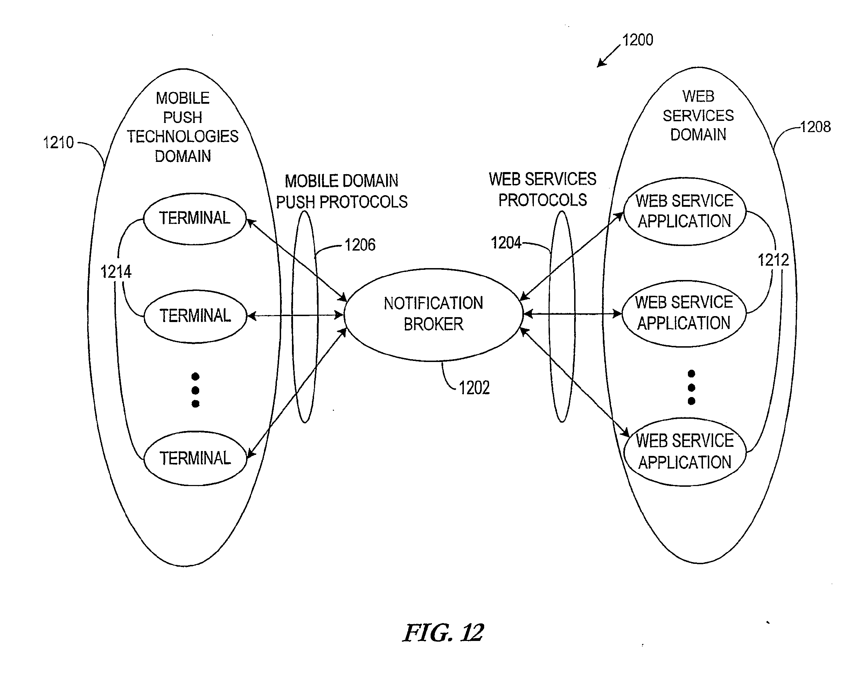

A notification (i.e., push) broker in accordance with the present invention provides a solution to these problems. An exemplary Web Services notification broker is described below in connection with FIGs. 12-13. The notification broker, serving as a Web Services push gateway in the following examples, abstracts the mobile technologies in such a way that a network (e.g., Internet) application developer can build applications without specific knowledge of the mobile domain. Many of the implementation details described below in connection with the notification broker may similarly be applied to Web Service-based embodiments of the various brokers described above.

FIG. 12 is an exemplary embodiment of a network system 1200 which provides a Web Services notification broker 1202 (also referred to herein as a Web Services push gateway) in accordance with the principles of the present invention. A primary function of the notification broker 1202 is to convert from one protocol set to another. In the case of the Web Services notification broker of the present invention, the protocol conversion is from the Web Services protocols 1204 (e.g., UDDI, WSDL, SOAP, etc.) to the Mobile Domain Push protocols 1206 (e.g., SMS, WAP Push, SIP, MMS, etc.).

The notification broker 1202 provides a gateway between the Web Services domain 1208 and the Mobile Push technologies domain 1210. The notification broker 1202 abstracts the mobile technologies in such a way that an Internet application developer can build applications without specific knowledge of the mobile domain. More particularly, the present invention abstracts the core push service behind a single Internet paradigm, namely Web Services in this illustrated embodiment. This advantageously frees the Internet application developer from requiring mobile technology-specific knowledge. Further, the illustrated embodiment of the invention abstracts the entire range of mobile push technologies behind a single gateway. This frees the Internet developer from having to assess the advantages and disadvantages of particular push technologies. The notification broker 1202 assumes the responsibility for deciding the most appropriate push technology to deliver the message to a particular user.

The notification broker 1202 may be implemented as a network element in the network 1200. The precise location of the network element is not particularly significant, except that it is logically positioned between the Web Service applications 1212 that push messages and the terminals 1214 to which the messages are to be pushed. While various environments may be employed to host these technologies, exemplary environments include a Java™ 2 Enterprise Edition (J2EE) Application Server, or a .NET Application environment.

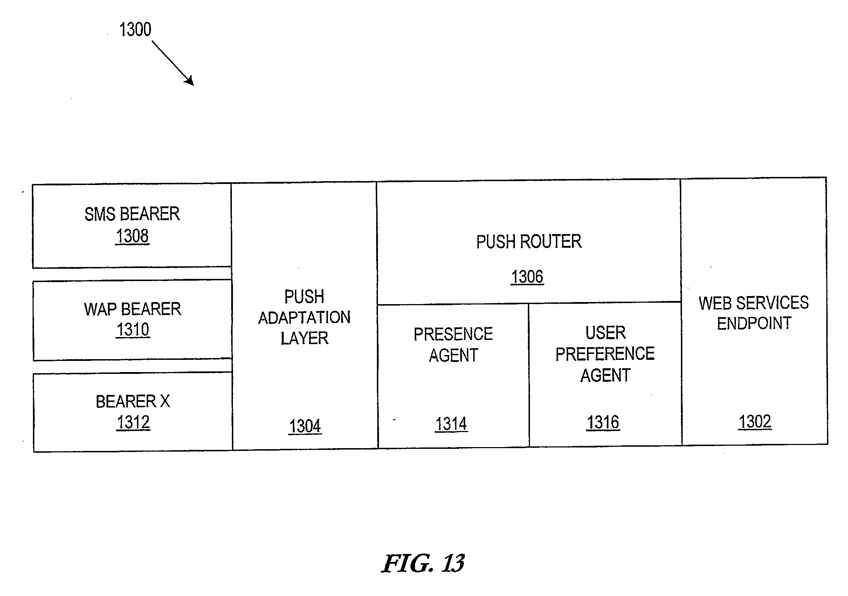

FIG. 13 is a block diagram illustrating an exemplary embodiment of a Web Services push gateway (i.e., notification broker) architecture 1300 in accordance with one embodiment of the present invention. One primary function of the Web Services push gateway is to convert from one protocol set to another. For example, considering current Web Services protocols and Mobile Push protocols, such conversion may be from the Web Services protocols (e.g., UDDI, WSDL, SOAP, etc.) to the Mobile Push protocols (e.g., SMS, WAP, SIP, etc.). The Web Services push gateway architecture 1300 shown in FIG. 13 illustrates an exemplary architecture for performing such functions.

The Web Services push gateway architecture 1300 includes a Web Services endpoint module 1302. This is the endpoint that terminates the Web Services protocols. One embodiment of a Web Services endpoint 1302 includes, for example, at least a server, such as HTTP server, for the transport layer. However, other transport layers may be included, such as Simple Mail Transfer Protocol (SMTP), or other known or future transport layers. In addition, the Web Services endpoint 1302 includes an XML messaging engine to parse incoming requests and generate appropriate responses. The XML messaging engine can be implemented using, for example, a SOAP engine. The XML messaging engine parses various parameters from data fields within the request. The Web Services endpoint 1302 can also interface with a service registry in order to advertise it's notification/push service. This capability can be implemented using, for example, the UDDI protocol and the WSDL definition language.

The exemplary Web Services push gateway architecture 1300 also includes a push adaptation layer 1304. The push adaptation layer 1304 provides a mobile technology-independent layer for the push router 1306 (described below). The push adaptation layer 1304 provides various functions, including two primary functions in accordance with one embodiment of the invention. The first of these primary functions is to provide a capability registry for the various mobile push bearers, such as the SMS bearer 1308, WAP bearer 1310, and any other bearers designated by bearer "X" 1312 (described below). This registry allows the bearers to advertise their push capacity in various terms, such as bandwidth, content capability, availability, latency, assured delivery, quality of service, and the like. A second primary function of the push adaptation layer 1304 is to forward the push message delivered by the push router 1306 to the appropriate bearer 1308, 1310, 1312.

The mobile push bearers 1308, 1310, 1312 comprise a set of pluggable components in one embodiment of the invention. A "bearer" is the name of the virtual bit pipe carrying the particular end user service, and generally refers to the technology that is used to broadcast or "bear" the signal to the user device. Each bearer has a specific function to connect to a specific mobile push technology. There are an indeterminate number of push technologies, particularly in view of future push technologies. For purposes of illustration, an SMS bearer 1308 and WAP bearer 1310 are specifically identified, while the bearer X 1312 represents any number and type of current and/or future push technologies.

The SMS bearer 1308 is used to connect to a Short Message Service Center (SMSC) to manage text messages. An SMSC is a network element through which short messages (e.g., via Short Messaging Service) may be transmitted, and stored for later transmission in the event that the message recipient is not reached. There are various protocols for such a connection, including, for example, the Computer Interface to Message Distribution (CIMD). A Short Message Entity (SME), commonly referred to as an application, is interconnected through the CIMD connection to a Message Center. The CIMD protocol is supported by various types of Message Centers, including the SMSC. A primary purpose of this interconnection is to transfer messages from the applications (i.e., SMEs) to the mobile stations, and from the mobile stations to the applications. The CIMD protocol is identified herein merely as a representative protocol in which the SMS bearer 1308 can connect to an SMSC, however any appropriate protocol can alternatively be implemented.

An exemplary embodiment of the WAP bearer 1310 complies with WAP Push Specifications. There are various possibilities for this bearer. A first possibility is that the bearer may connect to an existing WAP Push Proxy Gateway (PPG) using the WAP Push Access Protocol (PAP). The pushing of messages to a mobile client device is facilitated by the PPG between the wired and wireless networks. The PAP is a protocol used for conveying content to be pushed to a client, and related control information, between a Push Initiator (e.g., application/service) and the PPG. The PPG subsequently delivers the content to narrowband devices, such as wireless telephones, pagers, PDAs, laptop computers, etc.

Another possibility for the WAP bearer 1310 is to communicate directly to terminals using the WAP Push Over-the-Air (POTA) protocol. The WAP POTA is an over-the-air protocol for delivery of content to a WAP terminal from a WAP server such as a PPG. In this case, the Web Services push gateway of the present invention also serves as the WAP PPG. Other connection possibilities for the WAP bearer 1310, and the invention is not limited to the foregoing representative examples.

The bearer X 1312 represents any other current and/or future pluggable components. Other examples include an MMS bearer that can be used for multimedia content. An MMS bearer can, for example, be based on the WAP MMS Specifications. Another example includes a SIP bearer that is able to send push messages using the SIP protocol. The architecture 1300 supports any current or future pluggable components.

The presence agent 1314 is an agent that supplies information to the push router 1306. The presence agent 1314 informs the push router 1306 if and when a particular user is online. If the user is online, the presence agent 1314 also supplies information regarding the characteristics of the terminal being used by the user at that moment. For example, if the user is using a first type of mobile device, then the only push messages that the user is capable of receiving might be text messages. On the other hand, a user using a second, more sophisticated type of mobile device may be able to receive additional types of content, such as multimedia messages. The presence agent 1314 supplies this type of information to the push router 1306 to identify the particular terminal characteristics. In one embodiment of the invention, the presence agent 1314 may be accessible by another network service broker, namely, a presence broker such as that described in connection with FIG. 10.

The presence agent 1314 may also inform the push router 1306 of other details. For example, the presence agent 1314 may notify the push router 1306 of the capabilities of the underlying network under which the user is currently operating. These network capabilities may be in the form of network characteristics such as a second generation (2G) low bandwidth, third generation (3G) high bandwidth, etc. The presence agent 1314 may provide many other types of details as well. For example, the presence agent 1314 may provide status indicators, such as if the user is currently in a meeting, and does not want to receive messages that have audio content.

The user preferences agent 1316 is another agent that supplies information to the push router 1306. A primary purpose of the presence agent 1316 is to inform the push router 1306 of particular preferences of a user when receiving a push message. In this manner, a user can designate one or more user preferences that affect the transmission, presentation, or other characteristics associated with the push message.

In one embodiment of the invention, the user preferences agent 1316 includes a repository of preferences associated with each user. When a push message is being communicated, this repository is accessed for that particular user to which the push message is directed, and the user preferences can be applied accordingly. In addition, the user preferences agent 1316 may include an interface to allow the user to enter and/or edit those preferences. Such an interface may be implemented using a server, such as an HTTP server, which would allow users to edit their preferences via a web browser. Other interface implementations may also be used in accordance with the invention.

Any number of different types of user preferences identified by users may associated with the user preferences agent 1316. For example, the user may identify terminal preferences that identify the range of terminals that the user possesses. The user can also designate the type of content to be received on each of these various terminals.

Another example of a user preference includes network preferences. This type of preference designation relates to the type of network the user is connected to at a given time. For example, the user can designate that high bandwidth messages are sent only while the user is connected to 3G networks, or that messages are not to be sent while roaming, etc.

Still another example of a user preference is a presence preference. These are preferences relating to the users activity at a particular time. For example, the user may designate that audio messages are not to be sent while in a meeting, when sleeping, or at any time in which an audio message would be disruptive or otherwise undesirable. The presence preferences may also be used to forward messages to another terminal, person, etc. when the particular terminal is offline. Further, unsolicited messages from certain message origins may be ignored, messages with large attachments may be deferred, etc. The number and type of user preferences that can be implemented in this fashion is virtually endless.

At the heart of the Web Services push gateway 1300 is the push router 1306, which serves many purposes. Generally, the push router 1306 receives the push messages from the Web Services endpoint 1302, processes information received from one or more of the push adaptation layer 1304, presence agent 1314, and user preference agent 1316, forwards the push message to the appropriate bearer based on the collected information, and provides delivery reports to the push message initiators.

The realization and benefits of a notification broker may be determined in a manner described herein and in copending U. S. Patent application, Publication No. US2003/0095540 entitled "Web Services Push Gateway," filed on November 20,2001, which is assigned to the assignee of the instant application. The realization and benefits of other broker functionality may further be determined in a manner described herein, and in copending U. S. Patent application, Publication No. US2002/0173295 entitled "Context Sensitive Web Services," filed on May 15,2001, and in copending U. S. Patent application, Publication No. US2002/0173317 entitled "A System And Method For Location Based Web Services," filed on May 15,2001, both of which are assigned to the assignee of the instant application.

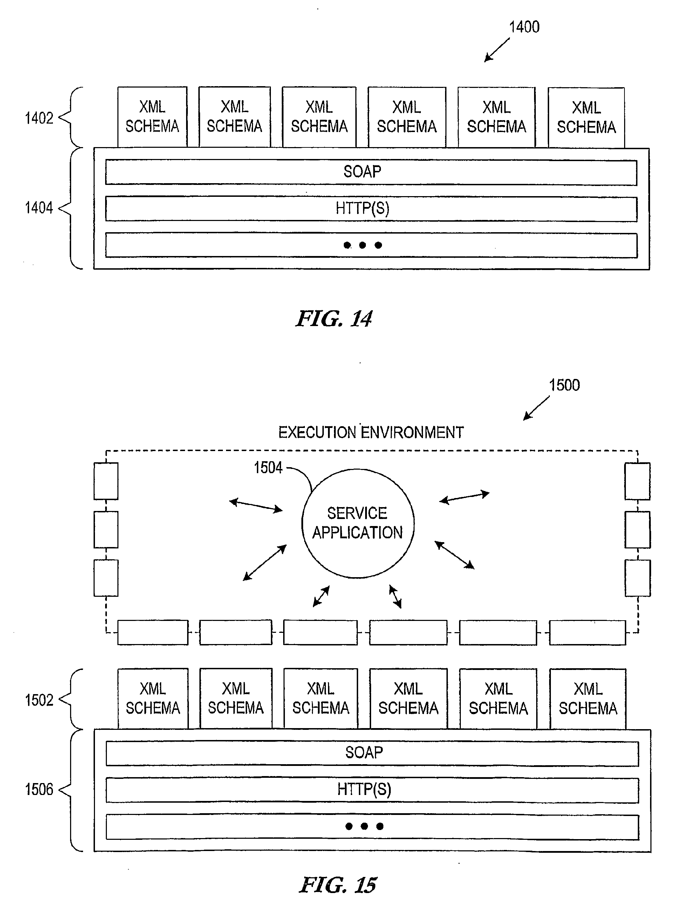

FIGs. 14-16 provide more general examples of exemplary interfaces between the various network elements in accordance with the principles of the present invention. FIG. 14 illustrates an exemplary implementation of a broker domain/Web Service logic interface 1400. This represents the interface between each of the brokers and the service provision infrastructure. This is based on loosely-coupled technology, as the broker domain/Web Service logic interface is a set of loosely-coupled interfaces with each broker having its own set in a stand-alone manner. As shown in the illustrated embodiment of FIG. 14, the XML schemata 1402 is provided at the broker domain/Web Service interface. A separate interface (i.e., schema for communication between a broker and SPI) is utilized for each of the brokers. The XML schemata is built on top of XML/SOAP/HTTP(S) 1404.

In accordance with one embodiment of the invention, the XML schemata 1402 is a schema specification for XML documents, where a schema is a method for specifying constraints on XML documents using an XML-based language. Schemata serve for describing the structure and constraining the contents of XML documents and associating datatypes with XML element types and attributes. One advantage for using protocols that are stacked on top of HTTP in accordance with the present invention is that firewall traversal is possible, such that communication through the HTTP port (e.g., port 80) can enter through companies' firewalls. Another advantage is that Web Services are independent of the platform on top of which they are utilized, meaning that the existing base of servers in the Internet need not be disregarded - a server operating on an operating system can be made to communicate with Web Services without the need to change the operating system to obtain the benefits of interoperability through Web Services. While the illustrated embodiments in FIGs. 14-16 are described in terms of XML schemata, it will be appreciated by those skilled in the art that other alternative current or future technologies facilitating the loosely-coupled attributes provided by XML may be employed in accordance with the invention.

An exemplary embodiment of a Web Service logic/API interface 1500 is illustrated in FIG. 15. This is the interface between each of the service applications and the SPI. This is based on loosely-coupled technology, like the broker domain/Web Service logic interface described in connection with FIG. 14. The XML schemata 1502 is provided at the Web Service logic/API interface to interface to the service application(s) 1504. The XML schemata 1502 is built on top of XML/SOAP/HTTP(S) 1506.

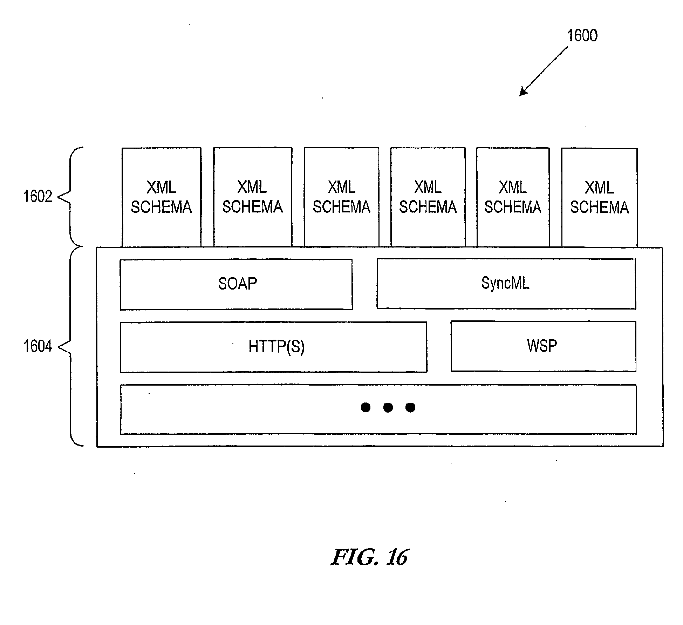

An exemplary embodiment of a terminal/broker domain interface 1600 is illustrated in FIG. 16. This is the interface between a terminal and each of the brokers. The XML schemata 1602 is designed independent of the underlying communication stack 1604. Thus, the same XML schemata 1602 may be used for Web domain terminals that have the capability to support, for example, SOAP/XML/HTTP(S), as well as for mobile domain terminals that have the capability to support SyncML/XML (extended with RPC functionality) on top of either WSP of a WAP stack or on top of HTTP(S).

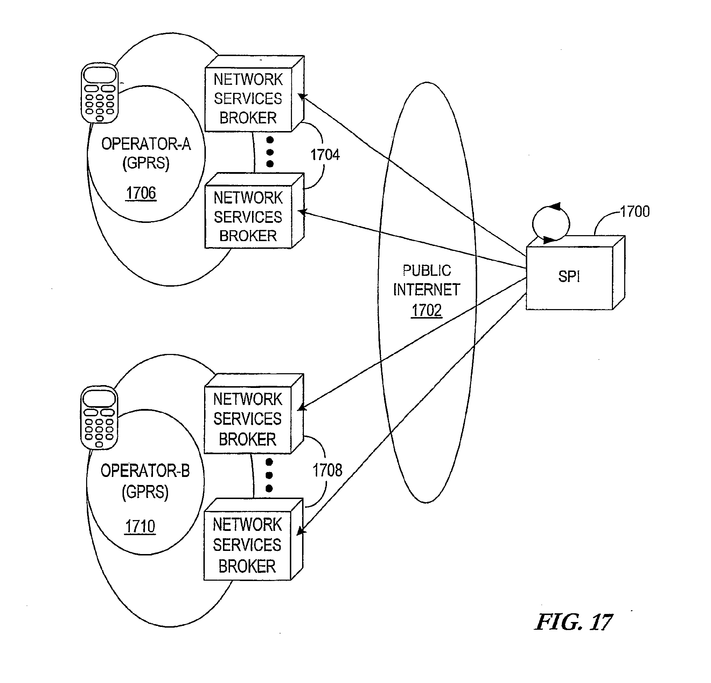

Service/content providers would generally like to offer the same, consistent service for all of their customers, regardless of which network operator the customers are connected to. Therefore, service/content providers would have to interface with several network operators' brokers. This is depicted in FIG. 17, where the SPI 1700 is coupled through the Internet 1702 to network service brokers associated with multiple operators. More particularly, the SPI 1700 is coupled to one or more network service brokers 1704 associated with operator-A 1706, and is further coupled to one or more network service brokers 1708 associated with operator-B 1710. This poses a difficult issue from the content provider's viewpoint, as operators' network service broker interfaces will likely differ for various reasons. For example, it is common for vendors to add some extensions to the implementation of a standard, not to mention that standards often leave room for different interpretations. Further, there are generally options provided in standards, and some vendors may implement certain options while others will not. Operators may also be executing different versions of the network service broker interfaces. Other reasons may also prevent a true "standardization" of network service broker interfaces. Service/application development will be slowed if applications on content provider sites must take all of these differences into account.

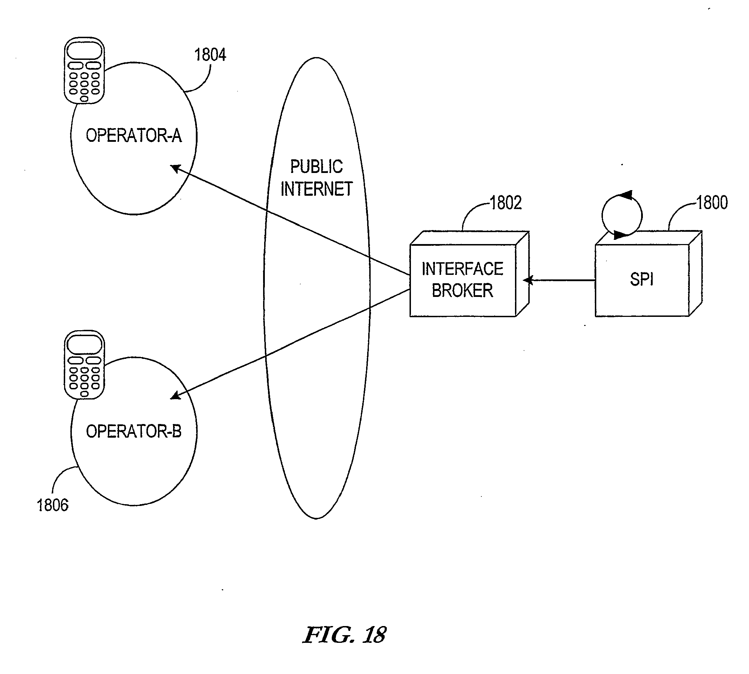

Therefore, the present invention also contemplates an interface broker at the content provider site that unifies the operator-specific differences and removes this responsibility from applications. FIG. 18 illustrates an exemplary implementation of such an interface broker in accordance with the principles of the present invention. In this embodiment, the service/content provider 1800 is relieved from having to understand the operator-specific differences in operators' network service broker interfaces. Rather, these differences are abstracted into the interface broker 1802, which then interfaces with each of the various operators 1804, 1806, etc. Further, the SPI is relieved from the task of selecting where to connect to obtain, for example, location information, and the illustrated embodiment of FIG. 18 simplifies how the SPI obtains the services. For example, a wholesale location information company makes business agreements with the operators, includes an appropriate sale markup, and sells the location service to SPIs. The SPIs pay the markup for the convenience of not needing to make business agreements with all of the operators individually. The interface between the interface broker 1802 and the SPI 1800 can be standardized.

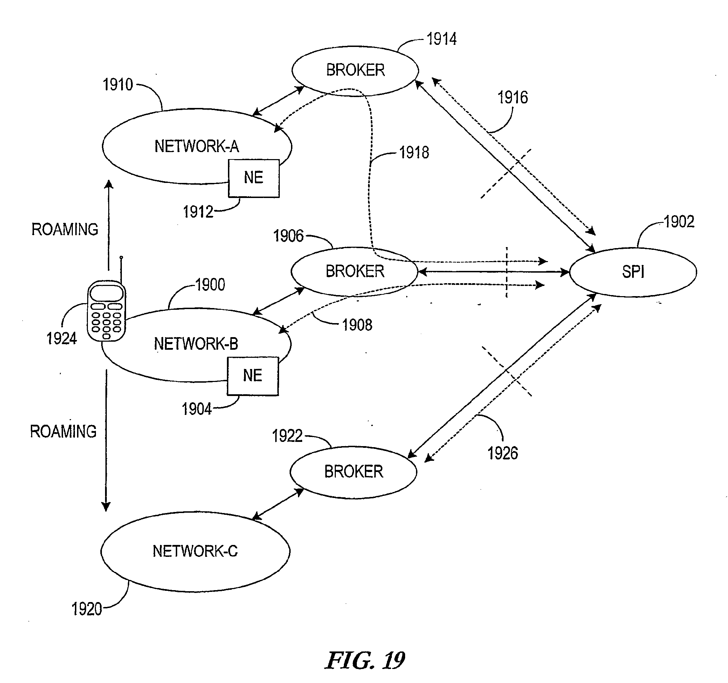

The benefits of network service brokers in accordance with the present invention extends to other networking issues, such as roaming. The present invention allows for the hiding of roaming issues. When a user is roaming in a network other than the user's home network, the services in the visited network may need to be accessed by the user. However, the user likely does not have a business relationship with the network to which the user has roamed. Rather, the home network owner (e.g., operator) has a business relationship with the visited network. A similar approach may be extended to services provided by brokers in the home network. FIG. 19 illustrates an exemplary manner in which roaming issues can be managed using network service brokers in accordance with the present invention.

When the user is in the home network (e.g., network-B 1900), the SPI 1902 is capable of accessing a specific service related to the functionality in Network Element (NE) 1904 in the home network 1900 via the broker 1906 as shown by arrow 1908. When the terminal user is roaming to network-A 1910, the issue becomes how the SPI 1902 can benefit from the specific service in network-A 1910 if such service can only be provided when the network-A 1910 resources (e.g., NE 1912) are accessed.

At least two possible solutions exist to address this particular roaming issue. The operator of the home network 1900 of the user has a business relationship, such as a roaming agreement, with the operator of the visited network-A 1910 for broker service roaming. In such a case, the SPI 1902 normally connects to the broker 1906 in the home network 1900. In a first embodiment, the broker 1906 provides the address of the corresponding broker 1914 in network-A 1910 along with a voucher to the SPI 1902. The voucher enables the SPI 1902 to utilize the broker roaming agreement between the operators of the home network-B 1900 and the visited network-A 1910. Depending on the implementation, the broker 1906 in the home network-B 1900 sends a voucher directly to the broker 1914 in network-A 1910, and gives the address of that broker 1914 to the SPI 1902 to allow the SPI 1902 to directly communicate with the broker 1914 as shown by arrow 1916. In another embodiment, the broker 1906 communicates with the visited network-A's broker 1914, and serves as a proxy in accessing the service of that network, as illustrated by arrow 1918.

When the terminal user is roaming from the home network-B 1900 to network-C 1920, there is no business relationship between the operators of network-B 1900 and network-C 1920. Thus, the SPI 1902 finds the address of the broker 1922 in network-C 1920 from the broker 1906 in the home network-B 1900 (or from the terminal 1924 itself). When the SPI 1902 has received the address of the broker 1922 associated with the visited network 1920, the SPI 1902 will communicate directly with the broker 1922 in the visited network-C 1920. For this to be possible, there may be a requirement that the SPI 1902 has established a business relationship with the operator of network-C 1920, whereby the operator of network-C 1920 allows the SPI 1902 to contact the specific broker 1922 as shown by arrow 1926.

Using the foregoing specification, the invention may be implemented as a machine, process, or article of manufacture by using standard programming and/or engineering techniques to produce programming software, firmware, hardware or any combination thereof.

Any resulting program(s), having computer-readable program code, may be embodied within one or more computer-usable media such as memory devices or transmitting devices, thereby making a computer program product or article of manufacture according to the invention. As such, the terms "article of manufacture" and "computer program product" as used herein are intended to encompass a computer program existent (permanently, temporarily, or transitorily) on any computer-usable medium such as on any memory device or in any transmitting device.

Executing program code directly from one medium, storing program code onto a medium, copying the code from one medium to another medium, transmitting the code using a transmitting device, or other equivalent acts, may involve the use of a memory or transmitting device which only embodies program code transitorily as a preliminary or final step in making, using, or selling the invention.

Memory devices include, but are not limited to, hard disk drives, diskettes, optical disks, magnetic tape, semiconductor memories such as RAM, ROM, PROMS, etc. Transmitting devices include, but are not limited to, the Internet, intranets, telephone/modem-based network communication, hard-wired/cabled communication network, cellular communication, radio wave communication, satellite communication, and other stationary or mobile network systems/communication links.

A machine embodying the invention may involve one or more processing systems including, but not limited to, CPU, memory/storage devices, communication links, communication/transmitting devices, servers, I/O devices, or any subcomponents or individual parts of one or more processing systems, including software, firmware, hardware, or any combination or subcombination thereof, which embody the invention as set forth in the claims.

From the description provided herein, those skilled in the art are readily able to combine software created as described with appropriate general purpose or special purpose computer hardware to create a computer system and/or computer subcomponents embodying the invention, and to create a computer system and/or computer subcomponents for carrying out the method of the invention.

It will, of course, be understood that various modifications and additions can be made to the various embodiments discussed hereinabove without departing from the scope of the present invention. For example, the invention may be used in connection with any type of networking environment, ranging from local area networks to proliferative global area networks such as the Internet, and including cooperative landline and mobile networks. From the foregoing description of the illustrated embodiments, those of ordinary skill in the art will readily appreciate the applicability of the invention in any comparable network environment.

Accordingly, the scope of the present invention should not be limited by the particular embodiments discussed above, but should be defined only by the claims set forth below and equivalents thereof.

## Claims

1. A Web Services push gateway (1300) comprising:
a Web Services endpoint (1302) configured to terminate Web Services protocols utilized by Web Services push applications in providing push messages, the Web Services endpoint (1302) comprising an interface for advertising a push service of the Web Services endpoint (1302);
a plurality of mobile push bearers (1308, 1310, 1312) each configured to communicate with a different one of a plurality of mobile push technologies;
a push adaptation layer (1304) coupled to the plurality of mobile push bearers (1308, 1310, 1312) and configured to provide a capability registry of bearer characteristics of each of the mobile push bearers (1308, 1310, 1312); and
a push router (1306) coupled to the Web Services endpoint (1302) configured to receive the push messages, and coupled to the mobile push bearers (1308, 1310, 1312) to forward the push messages to an elected one of the mobile push bearers (1308, 1310, 1312) for ultimate delivery to a recipient mobile terminal employing a mobile push technology corresponding to the elected mobile push bearer (1308, 1310, 1312).

2. The Web Services push gateway (1300) as claimed in claim 1, further comprising a presence agent configured to provide the push router (1306) with recipient presence Information, the recipient presence information comprising the recipient mobile terminal's online status and mobile terminal characteristics, wherein the push router is configured to elect one of the mobile push bearers (1308, 1310, 1312) based, at least in part, on the recipient presence information.

3. The Web Services push gateway (1300) as claimed in any preceding claim, further comprising a user preference agent configured to provide the push router (1306) with particular user preferences identified by the user of the recipient mobile terminal, wherein the push router is configured to elect one of the mobile push bearers (1308, 1310, 1312) based, at least in part, on the user preferences.

4. The Web Services push gateway (1300) as claimed in claim 3, wherein the user preferences agent comprises a preference repository to store the user preferences for each potential push message recipient.

5. The Web Services push gateway (1300) as claimed in any of claims 3 to 4, wherein the presence agent comprises a user preference interface configured to allow the user of the recipient mobile terminal to enter and/or modify the user preferences.

6. The Web Services push gateway (1300) as claimed in claim 5, wherein the user preference interface comprises a Hypertext Transfer Protocol server which is accessible by the user of the recipient mobile terminal via a web browser.

7. The Web Services push gateway (1300) as claimed in any preceding claim, wherein the push router's election of the elected one of the mobile push bearers (1308, 1310, 1312) is based at least in part on the bearer characteristics.

8. The Web Services push gateway (1300) as claimed in any preceding claim, wherein the Web Services endpoint (1302) comprises a server for terminating the Web Services protocols.

9. The Web Services push gateway (1300) as claimed in any preceding claim, wherein the Web Services endpoint (1302) comprises an Extensible Markup Language (XML) messaging engine to parse incoming requests associated with the push messages.

10. The Web Services push gateway (1300) as claimed in any preceding claim, wherein the web services endpoint (1302) is configured to interface with a service registry to advertise a push service of the Web Services endpoint (1302).

11. The Web Services push gateway (1300) as claimed in any preceding claim, wherein the push adaptation layer (1304) is configured to forward the push messages delivered by the push router (1306) to the elected one of the mobile push bearers (1308, 1310, 1312) for ultimate delivery to the recipient mobile terminal

12. The Web Services push gateway (1300) as claimed in any preceding claim, wherein the mobile push bearers (1308, 1310, 1312) comprises at least one of a Short Message Service ,SMS, bearer for connecting to a Short Message Service Center ,SMSC, a Wireless Application Protocol ,WAP, Push bearer for connecting to a WAP Push Proxy Gateway ,PPG, using the WAP Push Access Protocol ,PAP, a Wireless Application Protocol ,WAP, Push bearer for connecting to the recipient's mobile terminal via the WAP Push Over-the-Air ,POTA, protocol, a Multimedia Messaging Service ,MMS, bearer for communicating multimedia push messages via a WAP MMS protocol and a Session Initiation Protocol ,SIP, bearer to send the push messages via the SIP protocol.

13. A network system comprising:
one or more mobile terminals capable of receiving push messages via one of a plurality of mobile push technologies;
one or more Web Services applications capable of providing the push messages via Web Services protocols; and
a Web Services push gateway (1300) as claimed in any of claims 1 to 12.

14. A method comprising:
advertising a push service that provides transmission of push messages to mobile terminals which collectively implement a plurality of different mobile push technologies;
receiving a push message from a Web Services application via Web Services protocol, wherein the push message is for delivery to a recipient mobile terminal;
obtaining presence information relating to the availability and type of the recipient mobile terminal;
obtaining user preference information relating to particular user preferences identified by the user of the recipient mobile terminal;
providing a capability registry of bearer availability and capabilities information of each of a plurality of different mobile push bearers (1308, 1310, 1312) each capable of communicating with mobile terminals using a different mobile push technology;
selecting a mobile push bearer (1308, 1310, 1312) to transmit the push message to the recipient mobile terminal based on one or more of the presence information, user preference information, and bearer availability and capabilities information; and
delivering the push message from the selected mobile push bearer (1308, 1310, 1312) to the recipient mobile terminal using the mobile push technology provided by the selected mobile push bearer (1308, 1310, 1312).

15. A computer program comprising computer program instructions that, when performed by at least one processor, causes at least:
advertising a push service that provides transmission of push messages to mobile terminals which collectively implement a plurality of different mobile push technologies;
receiving a push message from a Web Services application via Web Services protocol, wherein the push message is for delivery to a recipient mobile terminal;
obtaining presence information relating to the availability and type of the recipient mobile terminal;
obtaining user preference information relating to particular user preferences identified by the user of the recipient mobile terminal;
providing a capability registry of bearer availability and capabilities information of each of a plurality of different mobile push bearers (1308, 1310, 1312) each capable of communicating with mobile terminals using a different mobile push technology;
selecting a mobile push bearer (1308, 1310, 1312) to transmit the push message to the recipient mobile terminal based on one or more of the presence information, user preference information, and bearer availability and capabilities information; and delivering the push message from the selected mobile push bearer (1308, 1310, 1312) to the recipient mobile terminal using the mobile push technology provided by the selected mobile push bearer (1308, 1310, 1312).

## Patentansprüche

1. Web-Dienste-Push-Gateway (1300), umfassend:
einen Web-Diensteendpunkt (1302), ausgelegt zum Terminieren von Web-Diensteprotokollen, die von Web-Dienste-Push-Anwendungen beim Bereitstellen von Push-Nachrichten benutzt werden, wobei der Web-Diensteendpunkt (1302) eine Schnittstelle zum Ankündigen eines Push-Dienstes des Web-Diensteendpunkts (1302) umfasst;
mehrere Mobil-Push-Träger (1308, 1310, 1312), jeweils ausgelegt zum Kommunizieren mit einer anderen mehrerer von Mobil-Push-Technologien;
eine mit den mehreren Mobil-Push-Trägern (1308, 1310, 1312) gekoppelte Push-Anpassungsschicht (1304), ausgelegt zum Bereitstellen einer Fähigkeitsregistrierdatenbank von Trägereigenschaften jedes der Mobil-Push-Träger (1308, 1310, 1312); und
einen mit dem Web-Diensteendpunkt (1302) gekoppelten Push-Router (1306), der dafür ausgelegt ist, die Push-Nachrichten zu empfangen, und mit den Mobil-Push-Trägern (1308, 1310, 1312) gekoppelt ist, um die Push-Nachrichten zu einem gewählten der Mobil-Push-Träger (1308, 1310, 1312) weiterzuleiten, zur letztendlichen Ablieferung an ein Empfänger-Mobilendgerät, das eine Mobil-Push-Technologie verwendet, die dem gewählten Mobil-Push-Träger (1308, 1310, 1312) entspricht.

2. Web-Dienste-Push-Gateway (1300) nach Anspruch 1, das ferner einen Präsenzagenten umfasst, der dafür ausgelegt ist, dem Push-Router (1306) Empfängerpräsenzinformationen bereitzustellen, wobei die Empfängerpräsenzinformationen den Onlinestatus und Mobilendgeräteeigenschaften des Empfänger-Mobilendgeräts umfassen, wobei der Push-Router dafür ausgelegt ist, mindestens teilweise auf der Basis der Empfängerpräsenzinformationen einen der Mobil-Push-Träger (1308, 1310, 1312) zu wählen.

3. Web-Dienste-Push-Gateway (1300) nach einem der vorhergehenden Ansprüche, das ferner einen Benutzerpräferenzagenten umfasst, der dafür ausgelegt ist, dem Push-Router (1306) konkrete Benutzerpräferenzen bereitzustellen, die durch den Benutzer des Empfänger-Mobilendgeräts identifiziert werden, wobei der Push-Router dafür ausgelegt ist, mindestens teilweise auf der Basis der Benutzerpräferenzen einen der Mobil-Push-Träger (1308, 1310, 1312) zu wählen.

4. Web-Dienste-Push-Gateway (1300) nach Anspruch 3, wobei der Benutzerpräferenzenagent ein Präferenzrepositorium zum Speichern der Benutzerpräferenzen für jeden potentiellen Push-Nachrichtenempfänger umfasst.

5. Web-Dienste-Push-Gateway (1300) nach einem der Ansprüche 3 bis 4, wobei der Präsenzagent eine Benutzerpräferenzschnittstelle umfasst, die dafür ausgelegt ist, dem Benutzer des Empfänger-Mobilendgeräts die Eingabe und/oder Modifikation der Benutzerpräferenzen zu erlauben.

6. Web-Dienste-Push-Gateway (1300) nach Anspruch 5, wobei die Benutzerpräferenzschnittstelle einen Hypertext-Transfer-Protokoll-Server umfasst, der dem Benutzer des Empfänger-Mobilendgeräts über einen Web-Browser zugänglich ist.

7. Web-Dienste-Push-Gateway (1300) nach einem der vorhergehenden Ansprüche, wobei die Wahl des gewählten der Mobil-Push-Träger (1308, 1310, 1312) durch den Push-Router mindestens teilweise auf den Trägereigenschaften basiert.

8. Web-Dienste-Push-Gateway (1300) nach einem der vorhergehenden Ansprüche, wobei der Web-Diensteendpunkt (1302) einen Server zum Terminieren der Web-Diensteprotokolle umfasst.

9. Web-Dienste-Push-Gateway (1300) nach einem der vorhergehenden Ansprüche, wobei der Web-Diensteendpunkt (1302) eine Extensible-Markup-Language- bzw. XML-Nachrichtenübermittlungsengine zum Parsen von mit den Push-Nachrichten assoziierten ankommenden Anforderungen umfasst.

10. Web-Dienste-Push-Gateway (1300) nach einem der vorhergehenden Ansprüche, wobei der Web-Diensteendpunkt (1302) dafür ausgelegt ist, mit einer Dienstregistrierdatenbank eine Schnittstelle aufzuweisen, um einen Push-Dienst des Web-Diensteendpunkts (1302) anzukündigen.

11. Web-Dienste-Push-Gateway (1300) nach einem der vorhergehenden Ansprüche, wobei die Push-Anpassungsschicht (1304) dafür ausgelegt ist, die durch den Push-Router (1306) abgelieferten Push-Nachrichten zur letztendlichen Ablieferung an das Empfänger-Mobilendgerät zu dem gewählten der Mobil-Push-Träger (1308, 1310, 1312) weiterzuleiten.

12. Web-Dienste-Push-Gateway (1300) nach einem der vorhergehenden Ansprüche, wobei die Mobil-Push-Träger (1308, 1310, 1312) mindestens einen der folgenden umfassen:
einen Träger für den Short Message Service, SMS, zur Verbindung mit einem Short Message Service Center, SMSC, einen Push-Träger des Wireless Application Protocol, WAP, zur Verbindung mit einem WAP Push Proxy Gateway, PPG, unter Verwendung des WAP Push Access Protocol, PAP, einen Push-Träger des Wireless Application Protocol, WAP, zur Verbindung mit dem Mobilendgerät des Empfängers über das Protokoll WAP Push Over-the-Air, POTA, einen Träger des Multimedia Messaging Service, MMS, zur Übermittlung von Multimedia-Push-Nachrichten über ein WAP-MMS-Protokoll und einen Träger des Session Initiation Protocol, SIP, zum Senden der Push-Nachrichten über das SIP-Protokoll.

13. Netzsystem, umfassend:
ein oder mehrere Mobilendgeräte mit der Fähigkeit zum Empfangen von Push-Nachrichten über eine von mehreren Mobil-Push-Technologien;
eine oder mehrere Web-Diensteanwendungen mit der Fähigkeit zur Bereitstellung der Push-Nachrichten über Web-Diensteprotokolle; und
ein Web-Dienste-Push-Gateway (1300) nach einem der Ansprüche 1 bis 12.

14. Verfahren, umfassend:
Ankündigen eines Push-Dienstes, der Übertragung von Push-Nachrichten zu mobilen Endgeräten bereitstellt, die zusammen mehrere verschiedene Mobil-Push-Technologien implementieren;
Empfangen einer Push-Nachricht von einer Web-Diensteanwendung über ein Web-Diensteprotokoll, wobei die Push-Nachricht für Ablieferung an ein Empfänger-Mobilendgerät bestimmt ist;
Erhalten von Präsenzinformationen in Bezug auf Verfügbarkeit und Art des Empfänger-Mobilendgeräts;
Erhalten von Benutzerpräferenzinformationen in Bezug auf konkrete Benutzerpräferenzen, die durch den Benutzer des Empfänger-Mobilendgeräts identifiziert werden;
Bereitstellen einer Fähigkeits-Registrierdatenbank von Trägerverfügbarkeits- und -fähigkeiteninformationen jedes mehrerer verschiedener Mobil-Push-Träger (1308, 1310, 1312) jeweils mit der Fähigkeit zur Kommunikation mit mobilen Endgeräten unter Verwendung einer anderen Mobil-Push-Technologie;
Auswählen eines Mobil-Push-Trägers (1308, 1310, 1312) zum Übertragen der Push-Nachricht zu dem Empfänger-Mobilendgerät auf der Basis einer oder mehrerer der Präsenzinformationen, Benutzerpräferenzinformationen und Trägerverfügbarkeits- und -fähigkeiteninformationen; und
Abliefern der Push-Nachricht von dem ausgewählten Mobil-Push-Träger (1308, 1310, 1312) zu dem Empfänger-Mobilendgerät unter Verwendung der durch den ausgewählten Mobil-Push-Träger (1308, 1310, 1312) bereitgestellten Mobil-Push-Technologie.

15. Computerprogramm mit Computerprogrammanweisungen, das, wenn es durch mindestens einen Prozessor ausgeführt wird, mindestens Folgendes bewirkt:
Ankündigen eines Push-Dienstes, der Übertragung von Push-Nachrichten zu mobilen Endgeräten bereitstellt, die zusammen mehrere verschiedene Mobil-Push-Technologien implementieren;
Empfangen einer Push-Nachricht von einer Web-Diensteanwendung über ein Web-Diensteprotokoll, wobei die Push-Nachricht für Ablieferung an ein Empfänger-Mobilendgerät bestimmt ist;
Erhalten von Präsenzinformationen in Bezug auf Verfügbarkeit und Art des Empfänger-Mobilendgeräts;
Erhalten von Benutzerpräferenzinformationen in Bezug auf konkrete Benutzerpräferenzen, die durch den Benutzer des Empfänger-Mobilendgeräts identifiziert werden;
Bereitstellen einer Fähigkeits-Registrierdatenbank von Trägerverfügbarkeits- und -fähigkeiteninformationen jedes mehrerer verschiedener Mobil-Push-Träger (1308, 1310, 1312) jeweils mit der Fähigkeit zur Kommunikation mit Mobilendgeräten unter Verwendung einer anderen Mobil-Push-Technologie;
Auswählen eines Mobil-Push-Trägers (1308, 1310, 1312) zum Übertragen der Push-Nachricht zu dem Empfänger-Mobilendgerät auf der Basis einer oder mehrerer der Präsenzinformationen, Benutzerpräferenzinformationen und Trägerverfügbarkeits- und -fähigkeiteninformationen; und
Abliefern der Push-Nachricht von dem ausgewählten Mobil-Push-Träger (1308, 1310, 1312) zu dem Empfänger-Mobilendgerät unter Verwendung der durch den ausgewählten Mobil-Push-Träger (1308, 1310, 1312) bereitgestellten Mobil-Push-Technologie.

## Revendications

1. Passerelle Push de Services Web (1300) comprenant :
un point d'extrémité de Services Web (1302) configuré pour terminer des protocoles de Services Web utilisés par des applications Push de Services Web dans la fourniture de messages Push, le point d'extrémité de Services Web (1302) comprenant une interface pour annoncer un service Push du point d'extrémité de Services Web (1302) ;
une pluralité de supports Push mobiles (1308, 1310, 1312) configurés chacun pour communiquer avec une technologie différente d'une pluralité de technologies Push mobiles ;
une couche d'adaptation Push (1304) couplée à la pluralité de supports Push mobiles (1308, 1310, 1312) et configurée pour fournir un registre de capabilités de caractéristiques de support de chacun des supports Push mobiles (1308, 1310, 1312) ; et
un routeur Push (1306) couplé au point d'extrémité de Services Web (1302) configuré pour recevoir les messages Push, et couplé aux supports Push mobiles (1308, 1310, 1312), pour acheminer les messages Push jusqu'à un support sélectionné des supports Push mobiles (1308, 1310, 1312) pour la délivrance finale à un terminal mobile destinataire employant une technologie Push mobile correspondant au support Push mobile sélectionné (1308, 1310, 1312).

2. Passerelle Push de Services Web (1300) selon la revendication 1, comprenant en outre un agent de présence configuré pour fournir au routeur Push (1306) des informations de présence de destinataire, les informations de présence de destinataire comprenant l'état en ligne du terminal mobile destinataire et les caractéristiques du terminal mobile, le routeur Push étant configuré pour sélectionner l'un des supports Push mobiles (1308, 1310, 1312), en fonction, au moins en partie, des informations de présence de destinataire.

3. Passerelle Push de Services Web (1300) selon l'une quelconque des revendications précédentes, comprenant en outre un agent de préférences d'utilisateur configuré pour fournir au routeur Push (1306) des préférences d'utilisateur particulières identifiées par l'utilisateur du terminal mobile destinataire, le routeur Push étant configuré pour sélectionner l'un des supports Push mobiles (1308, 1310, 1312), en fonction, au moins en partie, des préférences d'utilisateur.

4. Passerelle Push de Services Web (1300) selon la revendication 3, dans laquelle l'agent de préférences d'utilisateur comprend un gisement de préférences pour mémoriser les préférences d'utilisateur pour chaque destinataire de message Push potentiel.

5. Passerelle Push de Services Web (1300) selon l'une quelconque des revendications 3 à 4, dans laquelle l'agent de présence comprend une interface de préférences d'utilisateur configurée pour permettre à l'utilisateur du terminal mobile destinataire d'entrer et/ou de modifier les préférences d'utilisateur.

6. Passerelle Push de Services Web (1300) selon la revendication 5, dans laquelle l'interface de préférences d'utilisateur comprend un serveur à Protocole de Transfert Hypertexte qui est accessible par l'utilisateur du terminal mobile destinataire par l'intermédiaire d'un navigateur Web.

7. Passerelle Push de Services Web (1300) selon l'une quelconque des revendications précédentes, dans laquelle la sélection par le routeur Push du support sélectionné des supports Push mobiles (1308, 1310, 1312) est fonction au moins en partie des caractéristiques de support.

8. Passerelle Push de Services Web (1300) selon l'une quelconque des revendications précédentes, dans laquelle le point d'extrémité de Services Web (1302) comprend un serveur pour terminer les protocoles de Services Web.

9. Passerelle Push de Services Web (1300) selon l'une quelconque des revendications précédentes, dans laquelle le point d'extrémité de Services Web (1302) comprend un moteur de messagerie à Langage de Balisage Extensible (XML) pour analyser syntaxiquement les requêtes entrantes associées aux messages Push.

10. Passerelle Push de Services Web (1300) selon l'une quelconque des revendications précédentes, dans laquelle le point d'extrémité de Services Web (1302) est configuré pour s'interfacer avec un registre de services pour annoncer un service Push du point d'extrémité de Services Web (1302).

11. Passerelle Push de Services Web (1300) selon l'une quelconque des revendications précédentes, dans laquelle la couche d'adaptation Push (1304) est configurée pour acheminer les messages Push délivrés par le routeur Push (1306) au support sélectionné des supports Push mobiles (1308, 1310, 1312) pour la délivrance finale au terminal mobile destinataire.

12. Passerelle Push de Services Web (1300) selon l'une quelconque des revendications précédentes, dans laquelle les supports Push mobiles (1308, 1310, 1312) comprennent au moins l'un d'un support de Services de Messages Courts, SMS, pour la connexion à un Centre de Services de Messages Courts, SMSC, d'un support Push à Protocole d'Application Sans fil, WAP, pour la connexion à une Passerelle mandataire Push WAP, PPG, utilisant le Protocole d'Accès Push WAP, PAP, d'un support Push à Protocole d'Application Sans Fil, WAP, pour la connexion au terminal mobile du destinataire par l'intermédiaire du protocole Push Over-the-Air, POTA, WAP, d'un support de Services de Messagerie Multimédia, MMS, pour communiquer des messages Push multimédia par l'intermédiaire d'un protocole MMS WAP et d'un support à Protocole de Lancement de Session, SIP, pour envoyer les messages push par l'intermédiaire du protocole SIP.

13. Système de réseau comprenant :
un ou plusieurs terminaux mobiles capables de recevoir des messages Push par l'intermédiaire de l'une d'une pluralité de technologies Push mobiles ;
une ou plusieurs applications de Services Web capables de fournir les messages Push par l'intermédiaire des protocoles de Services Web ; et
une passerelle Push de Services Web (1300) selon l'une quelconque des revendications 1 à 12.

14. Procédé comprenant :
l'annonce d'un service Push qui assure la transmission de messages Push à des terminaux mobiles qui mettent en oeuvre collectivement une pluralité de technologies Push mobiles différentes ;
la réception d'un message Push depuis une application de Services Web par l'intermédiaire d'un protocole de Services Web, le message Push étant destiné à être livré à un terminal mobile destinataire ;
l'obtention d'informations de présence concernant la disponibilité et le type du terminal mobile destinataire ;
l'obtention d'informations de préférence d'utilisateur concernant des préférences d'utilisateur particulières identifiées par l'utilisateur du terminal mobile destinataire ;
la fourniture d'un registre de capabilités renfermant des informations de disponibilité et de capabilités de support de chacun d'une pluralité de supports Push mobiles différents (1308, 1310, 1312) capables chacun de communiquer avec des terminaux mobiles utilisant une technologie Push mobile différente ;
la sélection d'un support Push mobile (1308, 1310, 1312) pour transmettre le message Push au terminal mobile destinataire en fonction d'une ou de plusieurs informations de présence, informations de préférences d'utilisateur, et informations de disponibilité et de capabilités de support ; et
la délivrance du message Push par le support Push mobile sélectionné (1308, 1310, 1312) au terminal mobile destinataire utilisant la technologie Push mobile fournie par le support Push mobile sélectionné (1308, 1310, 1312).

15. Programme informatique comprenant des instructions de programme informatique qui, lorsqu'elles sont exécutées par au moins un processeur, amène au moins :
l'annonce d'un service Push qui assure la transmission de messages Push à des terminaux mobiles qui mettent en oeuvre collectivement une pluralité de technologies Push mobiles différentes ;
la réception d'un message Push depuis une application de Services Web par l'intermédiaire d'un protocole de Services Web, le message Push étant destiné à être livré à un terminal mobile destinataire ;
l'obtention d'informations de présence concernant la disponibilité et le type du terminal mobile destinataire ;
l'obtention d'informations de préférence d'utilisateur concernant des préférences d'utilisateur particulières identifiées par l'utilisateur du terminal mobile destinataire ;
la fourniture d'un registre de capabilités renfermant des informations de disponibilité et de capabilités de support de chacun d'une pluralité de supports Push mobiles différents (1308, 1310, 1312) capables chacun de communiquer avec des terminaux mobiles utilisant une technologie Push mobile différente ;
la sélection d'un support Push mobile (1308, 1310, 1312) pour transmettre le message Push au terminal mobile destinataire en fonction d'une ou de plusieurs informations de présence, informations de préférences d'utilisateur, et informations de disponibilité et de capabilités de support ; et
la délivrance du message Push par le support Push mobile sélectionné (1308, 1310, 1312) au terminal mobile destinataire utilisant la technologie Push mobile fournie par le support Push mobile sélectionné (1308, 1310, 1312).
